(19) Europäisches Patentamt
European Patent Office
Office européen des brevets

(11) EP 2 313 177 B1

# (12) EUROPÄISCHE PATENTSCHRIFT

(45) Veröffentlichungstag und Bekanntmachung des Hinweises auf die Patenterteilung:
**09.07.2014 Patentblatt 2014/28**

(21) Anmeldenummer: **09777813.8**

(22) Anmeldetag: **11.08.2009**

(51) Int Cl.:
***B01J 20/08*** *(2006.01)* ***B01J 20/24*** *(2006.01)*
***B01J 20/26*** *(2006.01)* ***B01J 20/28*** *(2006.01)*
***B01J 20/10*** *(2006.01)*

(86) Internationale Anmeldenummer:
**PCT/EP2009/005825**

(87) Internationale Veröffentlichungsnummer:
**WO 2010/017964 (18.02.2010 Gazette 2010/07)**

## (54) TIEFENFILTERSCHICHT MIT ANORGANISCHEM SCHICHTDOPPELHYDROXID

DEPTH FILTER LAYER COMPRISING INORGANIC LAYERED DOUBLE HYDROXIDE

COUCHE ÉPAISSE DE FILTRATION AVEC HYDROXYDE MINÉRAL DOUBLE STRATIFIÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.08.2008 DE 102008037678**

(43) Veröffentlichungstag der Anmeldung:
**27.04.2011 Patentblatt 2011/17**

(73) Patentinhaber: **Sartorius Stedim Biotech GmbH
37079 Göttingen (DE)**

(72) Erfinder:
- **KÖHLER, Katrin
37075 Göttingen (DE)**
- **THIEFES, Axel
37181 Hardegsen (DE)**
- **TARRACH, Klaus
25220 Helsingborg (SE)**

(74) Vertreter: **Müller-Boré & Partner Patentanwälte PartG mbB
Friedenheimer Brücke 21
80639 München (DE)**

(56) Entgegenhaltungen:
**WO-A-2006/127652**
**GB-A- 1 483 088**
**US-A1- 2006 032 814**

EP 2 313 177 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft eine Tiefenfilterschicht mit anorganischem Schichtdoppelhydroxid, ein Verfahren zu ihrer Herstellung und ein Verfahren zur Abtrennung mindestens einer Kontaminante von mindestens einem Zielprodukt in einem flüssigen Medium mittels mindestens einer vorstehenden Tiefenfilterschicht. Dabei wird zur Abtrennung von unerwünschten biologischen Komponenten aus Prozesslösungen ein flüssiges Medium, welches diese biologischen Komponenten und ein gewünschtes Zielprodukt enthält, mit der erfindungsgemäßen Tiefenfilterschicht in Kontakt gebracht, wobei mindestens eine unerwünschte biologische Komponente adsorptiv an den Tiefenfilter gebunden und somit aus der Prozesslösung entfernt wird. Entsprechend soll das gewünschte Zielprodukt, wie z.B. therapeutische Proteine, ungehindert und in aktiver Form den Tiefenfilter passieren können. Zu den unerwünschten biologischen Komponenten zählen insbesondere biologische Kontaminanten, wie z.B. Nukleinsäuren, Zellproteine, Viren oder Endotoxine aus Prozesslösungen. Therapeutische Proteine sind z.B. Antikörper, Hormone, Enzyme oder Peptide.

Eine große Zahl von therapeutischen, rekombinanten Proteinen basieren auf Zellkulturprozessen, die in klein- und großtechnischem Maßstab in Bioreaktoren oder Fermentern durchgeführt werden. Die Zellkulturlösung enthält das gewünschte Zielprotein inmitten einer Vielzahl von weiteren Bestandteilen wie intakte Zellen, Zellbruchstücke und kleinere Zellbestandteile, die von dem Zielprotein in einem aufwendigen und aus vielen Teilschritten bestehenden Prozess ("Downstream-Prozeß") abgetrennt werden müssen. Die Tiefenfiltration spielt bei der Abtrennung von Zellen, Zellbruchstücken und kolloidalen Bestandteilen eine große Rolle.

Tiefenfilter basierend auf Cellulose-Fasern sind unter anderem in folgenden Patenten beschrieben:

US 5,232,595 beschreibt Tiefenfilter bestehend aus Fasermaterialien wie Cellulose, Polyolefinen, Glas oder Keramik in Kombination mit Kieselgur oder Perliten.

US 4,676,904 beschreibt Tiefenfilterschichten bestehend aus neutralen und positiv geladenen Cellulosefasern in Kombination mit Kieselgur oder Perliten.

US 4,007,114 beschreibt partikelfreie Filtermedien bestehend aus Cellulose- und Glasfasern und einem positiv geladenen Melamin-Formaldehyd-Harz zur Abtrennung von elektronegativen Partikeln der Größe 0,1-0,7 μm. Die Zugabe von Kieselgur in dieses Filtersystem ist in US 4,007,113 und US 4,321,288 beschrieben.

US 4,305,782 beschreibt ein Filtersystem mit einem positiven Zetapotential bestehend aus Cellulosefasern und einem $SiO_2/Al_2O_3$-Verbund ohne Nassfestmittel. Eine Methode zur Entfernung von Kontaminanten mit Größen im Submikrometerbereich aus biologischen Lösungen mit den in US 4,305,782 offenbarten Filtersystemen ist in US 4,366,068 beschrieben.

Die Einführung einer Kombination aus nicht vermahlenen und vermahlenen Cellulosefasern in ein Filtersystem zusammen mit 50 Gewichtsprozent eines Pulvers wie Kieselgur/Perlite und einem positiv geladenen Melamin-Formaldehyd-Harz ist in US 4,309,247 beschrieben.

US 4,282,261 beschreibt ein Verfahren zur Entfernung von Trübstoffen aus instabilen Getränken mittels eines Filtersystems bestehend aus Cellulosefasern, Kieselgur und einem Polyamid/Polyamin-Epichlorhydrin-Harz.

US 4,859,340 beschreibt eine Tiefenfilterschicht bestehend aus mindestens 50 Gewichtsprozent eines $SiO_2$-haltigen Pulvers wie Kieselgur, Cellulosefasern und 1-3 Gewichtsprozent eines Polyamid/Polyamin-Epichlorhydrin-Harzes, wobei die Tiefenfilterschicht erhöhte Bindungskapazitäten zu elektronegativen partikulären Kontaminanten aus Flüssigkeiten aufweist.

Die Einführung von primären und sekundären Ladungsträgern in Tiefenfilterelemente umfassend Cellulosefasern und Kieselgur ist in US 4,981,591 beschrieben. Ein Polyamid/Polyamin-Epichlorhydrin-Harz wird als primäres Ladungsmodifizierungsagenz auf der Oberfläche der Tiefenfilterelemente adsorbiert, und nachfolgend werden aliphatische Polyamine mit primären und sekundären Amin-Funktionen als sekundäres Ladungsmodifizierungsagenz an Epoxygruppen des primären Ladungsmodifizierungsagenzes gebunden. Das Verfahren zur Entfernung anionischer Kontaminanten aus wässrigen Lösungen mittels dieser in US 4,981,591 offenbarten Filterschichten ist in US 5,085,780 beschrieben.

GB-Patent 1 483 088 offenbart Kompositfilter, umfassend feine Polyamid-Fasern, mit einer mittleren Dicke von 0,05 bis 10 μm und einer mittleren Faserlänge von 0,5 bis 100 mm, Partikel mit einem mittleren Durchmesser von 0,1 bis 10 μm, bestehend aus einem Metalloxid bzw. -hydroxid, wobei das Metall aus der Gruppe Ti, Al, Zr und/oder Si ausgewählt ist, und Cellulose-Fasern mit einer mittleren Dicke von 5 bis 50 μm und einer mittleren Faserlänge von 1 bis 100 mm.

Die gemäß dem Stand der Technik verwendeten Tiefenfilterschichten werden zum einen zur Abtrennung von Partikeln größer als die Porengröße des Filters (Siebeffekt) eingesetzt und zum anderen werden Partikel kleiner als die Porengröße des Filters durch adsorptive Wechselwirkungen vom Tiefenfilter zurückgehalten. Inzwischen finden auf Cellulose basierende Tiefenfilterschichten insbesondere ihren Einsatz zur Aufreinigung von Zellkulturlösungen. In den letzten 10 Jahren sind die Zelldichten in Zellkulturprozessen von ca. $10^5$ Zellen/ml auf weit über $10^7$ Zellen/ml angestiegen. Damit verbunden sind stark gesunkene Zellvitalitäten, die mit der eingehenden Zelllyse zu einer extrem stark angestiegenen Konzentration von Zellproteinen und DNS geführt haben. Moderne Zellkulturprozesse weisen Zelldichten von

über $10^7$ Zellen pro ml und Vitalitäten von kleiner als 50 % auf, was zu DNS-Konzentrationen von bis zu $10^6$ ppm (1 g/l) führen kann (Tarrach et al., Pharmaceutical Technology Europe, 01. April 2008, 71-77). Hier liegt der entscheidende Grund für die zunehmenden Anforderungen nach besonderen Tiefenfiltern bezüglich der Abtrennung der unerwünschten Bestandteile wie Zellen, Zellbruchstücke, kolloidale Bestandteile, Zellproteine, DNS usw.. Gleichzeitig muss sichergestellt werden, dass das kostenintensive therapeutische Zielprotein ungehindert und in aktiver Form den Tiefenfilter passieren kann. Somit besteht ein ständiger Bedarf an verbesserten Tiefenfilterschichten hinsichtlich höherer Kapazitäten und/oder höherer Kontaminanten-Entfernung bei ausreichend hoher Transmission des Zielproteins.

Die Abreicherung der Zellkultur-DNS wird von behördlicher Seite ausdrücklich verlangt, da sie ein Risko für den Patienten aus humanpathogener Sicht darstellt. Richtlinien sind "Points to Consider in the Manufacturing and Testing of Monoclonal Antibody Products for Human Use" (FDA CBER; February 28, 1997) und "Requirements for Biological Substances No. 50. Requirements for the Use of Animal Cells as in vitro Substrates for the Production of Biologicals" (WHO Technical Report Series No. 878, 1998). Aus verfahrenstechnischer Sicht stellen hohe DNS-Konzentrationen ein Problem dar, da der dem Bioreaktor/Fermenter nachgeschaltete Aufreinigungsprozess diese DNS-Mengen laut den Richtlinien bis unterhalb der Nachweisgrenze entfernen muss. In der Regel werden zur DNS-Abreicherung chromatographische Verfahren (Protein A im "Capture-Schritt" und Anionenaustauschchromatographie im Durchflussmodus) verwendet. Bei initialen DNS-Konzentrationen von grösser als $10^6$ ppm ist die adäquate DNS-Abreicherung durch diese Verfahren jedoch verfahrenstechnisch und wirtschaftlich unpraktikabel (K. Tarrach, "Process Economy of Disposable Chromatography in Antibody Manufacturing", WIBio's BioProcess Technology 4th Annual Conference (Amsterdam, The Netherlands, April 2007)).

Um die nachgeschalteten Prozesse von hohen DNS- und Kontaminanten-Konzentrationen zu entlasten, sind daher bei den initialen Aufarbeitungsschritten zusätzliche Schritte oder verbesserte Technologien erforderlich, da chromatographische Methoden an dieser Stelle aufgrund des hohen Leitfähigkeitsprofiles versagen (J. Nolan, EMD Pharmaceuticals, Downstream Technology Forum, Boston, Massachusetts, October 9th, 2007).

Eine solche Möglichkeit bietet prinzipiell der Einsatz einer größeren Tiefenfilterfläche bzw. eines größeren -volumens, wobei sich hier insbesondere mehrlagige Tiefenfilter als effektiv erweisen, da durch den Einsatz einer grösseren Filterschichthöhe (2 Filterschichten übereinandergelegt) und auf Grund der damit verbundenen höheren Verweilzeit und der grösseren Bindungskapazität grössere DNS-Mengen als bei einlagigen Tiefenfiltern abgereichert werden können.

Aus der Literatur sind bislang nur wenige Studien zur DNS-Abreicherung durch Tiefenfilter bekannt (Übersicht in: Yigzaw et al., Biotechnol. Prog. 2008, 22, 288 - 296; "Exploitation of the Adsorptive Properties of Depth Filters for Host Cell Protein Removal during Monoclonal Antibody Purification"). Diese zeigen, dass die DNS-Bindung sowohl über hydrophobe als auch über ladungsabhängige Mechanismen erfolgt. Dabei ist eine positive Oberflächenladung des Filters am bedeutsamsten, die durch Verwendung eines positiv geladenen Binders erreicht wird. Der Einfluß der Bindermenge auf die DNS-Rückhaltung wurde von Eschrich *et al.* untersucht und zeigt, dass sich die DNS-Rückhaltung nur begrenzt über die Bindermenge erhöhen lässt (BioPharm, January 1997, 46 - 49). Diese Methode besitzt zudem den wesentlichen Nachteil, dass mit steigender Bindermenge im Tiefenfilter auch die Menge an extrahierbaren Bestandteilen im Prozess zunimmt.

Somit stellen Tiefenfilter, die zu einer erhöhten DNS-Abreicherung ohne gleichzeitige Erhöhung der extrahierbaren Bestandteile befähigt sind, eine wünschenswerte Verbesserung dar. Gleichzeitig darf mit zunehmender DNS-Abreicherung keine zunehmende Abreicherung des Zielproduktes, wie z.B. therapeutische Proteine, erfolgen. In diesem Zusammenhang ist es wichtig herauszustellen, dass DNSabreichernde Tiefenfilterschichten eine solche physikochemische Stabilität mitbringen sollten, die einen Einsatz vor bzw. nach dem chromatographischen Prozess im Downstreamprozess erlaubt. Dabei sollte die Bindungskapazität der DNS-abreichernden Tiefenfilterschicht in dem Leitfähigkeitsprofil von Zellkulturüberständen liegen, um eine sichere Abreicherung der beschriebenen Kontaminanten zu ermöglichen. Ein Einsatz von solchen Tiefenfilterschichten zur Entlastung nachgeschalteter, kostenintensiver Aufreinigungsschritte ist zu Beginn des Prozesses nach den ersten Aufreinigungsschritten denkbar und notwendig.

In Angew. Chem. 2000, 112, 4207-4211, wird über lösliche Schichtdoppelhydroxide (LDH) als anorganischer, nicht cytotoxischer Vektor in Form von DNS-LDH-Hybriden berichtet. Dabei werden negativ geladene DNS-Fragmente über Ionenaustauschprozesse in die Zwischenschichträume der positiv geladenen, brucitartigen Schichten des Schichtdoppelhydroxids intercaliert. Durch diesen Einbau wird der Abbau von DNS verhindert und der Transport der DNS-LDH-Hybride in Säugetierzellen durch Endocytose ermöglicht. Im Cytoplasma der Zelle wird dann die DNS für weitere Vorgänge wieder freigesetzt.

In DE 102 37 517 A1 und DE 102 37 518 A1 wird eine An- bzw. Abreicherung von Biomolekülen mittels pulverförmiger Schichtdoppelhydroxide wie kalzinierte Hydrotalcite beschrieben. Die porösen Schichtdoppelhydroxide fungieren als Sorptionsmittel, die mit Bindemitteln wie u. a. Alginat, Chitosan, Pektin und Calciumcarbonat zu Teilchenaggregaten oder Formkörpern verbunden sein oder auf einem Träger wie Calciumcarbonat abgeschieden sein können. Dabei werden hohe Bindungskapazitäten sowohl zwischen den kalzinierten Hydrotalciten und DNS als auch zwischen den kalzinierten Hydrotalciten und den gewünschten Zielproteinen erreicht. Mittlere Teilchengrößen (D50) der Hydrotalcite von mehr als 1 µm erweisen sich als besonders vorteilhaft für die Verwendung als Sorptionsmittel. Eine selektive DNS-Abtrennung von Zielproteinen mittels dieser Sorptionsmittel wird gemäß DE 102 37 517 A1 und DE 102 37 518 A1 nicht erreicht.

JP 2006-026566 A beschreibt ein filmartiges Material, bestehend aus Partikeln organischer Polymere, Hydrotalcit und Filtermaterial auf Basis von Papier oder Plastikfilmen, zur Adsorption von Gasen, zur Desodorierung im Haushaltsbereich, zur Lebensmittelfrischhaltung und als Insektenrepellens. JP 2003-047647 A beschreibt eine desodorierende Zusammensetzung aus Hydrotalcit, Metalloxiden, (Meth)Acrylsäurederivaten und Organopolysiloxanen. WO 2005/014160 A1 beschreibt ein poröses Material auf der Basis von cellulose- oder ligninhaltigem Papier und anorganischen Schichtdoppelhydroxiden. DE 295 20 817 U1 beschreibt ein aus Cellulosefasern und aus einem Naßfestmittel hergestelltes Papier. DE 100 44 218 A1 beschreibt naßfest ausgerüstete Tiefenfilter, deren Cellulosefasern mit einem hydrophilen Polyisocyanat behandelt sind.

Über eine selektive und ausreichend hohe Abreicherung von unerwünschten Biomolekülen wie DNS bei gleichzeitiger Nichtbindung von Zielproteinen mittels Hydrotalcit oder mittels Tiefenfilterschichten ist im Stand der Technik nichts bekannt.

Die Aufgabe der Erfindung besteht darin, stabile und kostengünstige Tiefenfilterschichten im klein- und großtechnischem Maßstab bereitzustellen, die eine besonders hohe und schnelle Abreicherung von unerwünschten biologischen Kontaminanten, wie z.B. Nukleinsäuren aus flüssigen Medien, ermöglichen, wobei gleichzeitig die gewünschten Zielprodukte, wie z.B. therapeutische Proteine, ungehindert und in aktiver Form den Tiefenfilter passieren können. Ferner soll ein Verfahren zur Abtrennung von biologischen Kontaminanten aus Prozesslösungen vorgeschlagen werden.

Diese Aufgabe wird durch die Bereitstellung einer Tiefenfilterschicht nach Anspruch 1, eines Verfahrens zur Herstellung der Tiefenfilterschicht nach Anspruch 12 und durch die Bereitstellung eines Verfahrens zur Abtrennung von Zielprodukten von Kontaminanten gemäß Anspruch 15 gelöst.

Unter Zielprodukten sollen alle Produkte verstanden werden, die mittels des vorgelagerten Herstellungsprozesses gewonnen werden sollen. Diese umfassen Biomoleküle wie Proteine, Peptide, Polypeptide oder Hormone. Insbesondere werden unter Zielprodukten therapeutische Proteine verstanden.

Unter Nukleinsäuren sollen hierbei alle natürlich vorkommenden Nukleinsäuren wie Ribonucleinsäure (RNS) und Desoxyribonukleinsäure (DNS), insbesondere DNS genomischen aber auch epigenomischen Ursprungs aus eukaryotischen, prokaryotischen und viralen Quellen, und ganz besonders Nukleinsäuren mit einer Kettenlänge von mehr als 15 Basenpaaren verstanden werden.

Unter Kontaminanten sollen alle Stoffe verstanden werden, die unterschiedlich von dem Zielmolekül sind und in der Prozesslösung enthalten sind, insbesondere ganze Zellen und Zellaggregate, Zellbruchstücke, kolloidale Bestandteile und makromolekulare Biomoleküle, bei letzteren insbesondere solche Biomoleküle, die aus der Gruppe der Nukleinsäuren, der Wirtszellproteine, der Lipopolysaccharide, der Lipide, der Saccharide usw. ausgewählt sind. Der Begriff Prozeßlösungen umfasst solche Lösungen, in denen das Zielmolekül durch biologische Produzenten hergestellt wird (Fermentationsansatz), insbesondere biologische Produzenten aus der Gruppe der eukaryotischen und prokaryotischen Organismen und Zellen. Außerdem umfasst er solche Lösungen, die sich aus einer Fermentationsbrühe ableiten, insbesondere solche Lösungen, die durch Abtrennverfahren wie Zentrifugation, Vorfiltration, osmotische Verfahren oder Verdünnung oder den Eintrag von Chemikalien usw. hergestellt werden.

Überraschenderweise wurde gemäß der vorliegenden Erfindung gefunden, dass anorganische Schichtdoppelhydroxide, insbesondere Hydrotalcit, umfassende Tiefenfilterschichten selektiv biologische Komponenten binden, indem eine besonders hohe Abreicherung von unerwünschten biologischen Kontaminanten wie DNS stattfindet, während gewünschte Zielproteine ungehindert den Tiefenfilter passieren können. Tiefenfilter des Stands der Technik reichern nur unbedeutende Mengen an DNS ab und Zielproteine passieren weitgehend ungehindert den Tiefenfilter. Hydrotalcit-Pulver des Standes der Technik, die nicht in Tiefenfilterschichten verarbeitet sind, reichern sowohl in erwünschter Weise DNS als auch in unerwünschter Weise Zielproteine ab.

Im Vergleich zum Stand der Technik werden mit den erfindungsgemäßen Tiefenfilterschichten bis zu 10 mal so hohe Abreicherungen von DNS erreicht (vgl. nachfolgende Tabelle 3, "50 % DBT", z.B. TF4 versus TF7), ohne dass das gewünschte Zielprotein an den Tiefenfilter gebunden wird. Dieses Verhalten ist überraschend, da beispielsweise Hydrotalcit als Pulver keine Selektivität besitzt; es werden sowohl biologische Kontaminanten wie DNS als auch gewünschte Zielproteine in hohem Maße gebunden, was eine Anwendung des Pulvers *per se* zur Aufreinigung von Zellkulturlösungen unmöglich macht. Erst durch die erfindungsgemäße Verarbeitung beispielsweise des Hydrotalcit-Pulvers mit Cellulose-Fasern, gegebenenfalls Kieselgur, und positiv geladenen Nassfestmitteln zu Tiefenfilterschichten wird diese hohe Selektivität hinsichtlich der abzutrennenden biologischen Komponenten aus Prozesslösungen erreicht. Offensichtlich beruht dieses überraschende und vorteilhafte Verhalten auf einer Wechselwirkung zwischen dem Hydrotalcit und der komplexen Struktur des geladenen Nassfestmittels.

Unter Nassfestmitteln sollen hierbei erfindungsgemäß alle wasserlöslichen Kunstharze verstanden werden, die der wässrigen Suspension im Herstellungsprozess des Tiefenfilters zugegeben werden, um die Zug-, Falz-, Berst- und Abriebfestigkeit des Tiefenfilters im nassen Zustand zu erhöhen. Dabei werden Polymere oder multifunktionale Verbindungen mit reaktiven Gruppen verwendet, die erst unter den Trocknungsbedingungen mit den Carboxyl- und/oder OH-Gruppen der Cellulose und des anorganischen Pulvers reagieren und dabei die Filterkomponenten miteinander verbrücken. Die wichtigsten Gruppen von Nassfestmitteln sind Epichlorhydrin-Harze, Melamin-Formaldehyd-Harze (MF), Harnstoff-Formaldehyd-Harze (HF), Glyoxal-Polyacrylamid-Harze und ferner Isocyanat-Harze. Positiv geladene Naßfestmittel umfassen bevorzugt Polyamin-Epichlorhydrin-Harze, Polyamid-Epichlorhydrin-Harze und Polyamid-Polyamin-Epichlorhydrin-Harze wie z.B. Kymene®, Nadavin® oder Polycup®, in denen als reaktive Gruppen kationische Azetidiniumgruppen mit ringgespannter Vierringstruktur zur Selbst- und Fremdvernetzung befähigt sind. Mit den erfindungsgemäßen, beispielsweise hydrotalcithaltigen Tiefenfilterschichten können erstmals Tiefenfilterschichten bereitgestellt werden, die zusätzlich zur herkömmlichen Zell- und Zellbruchstückabtrennung sowie Entfernung kolloidaler Bestandteile auch gleichzeitig hohe Mengen an DNS aus Zellkulturlösungen entfernen. Somit liefern die erfindungsgemäßen, beispielsweise hydrotalcithaltigen Tiefenfilterschichten Filtrate mit erhöhter Qualität bezüglich erniedrigter Kontaminanten-Konzentrationen, was vorteilhaft zu einer Vereinfachung der nachfolgenden und zum Teil aufwendigen Aufreinigungsschritte im "Downstream-Prozess", d. h. in dem nachgeschalteten, mehrstufigen Prozess zur Aufarbeitung des Zielmoleküls, führt. Die physikochemische Stabilität der erfindungsgemäßen Tiefenfilterschichten erlaubt hierbei sowohl einen Einsatz der Tiefenfilter für die Filtration von Zellkulturlösungen vor den chromatographischen Schritten als auch nach den chromatographischen Schritten im Downstreamprozess. Dabei werden hohe DNS-Bindungskapazitäten in dem Leitfähigkeitsprofil der Zellkulturüberstände erreicht.

Wie schon vorstehend teilweise beschrieben, ist die erfindungsgemäße Tiefenfilterschicht aus Cellulose-Fasern und/oder ihren Derivaten, mindestens einem anorganischen Schichtdoppelhydroxid und mindestens einem organischen Nassfestmittel hergestellt.

Gemäß der vorliegenden Erfindung werden Cellulosefasern und/oder ihre Derivate eingesetzt, die ursprünglich aus Holz (Hart- oder Weichholz) oder Baumwolle gewonnen wurden. Bevorzugt werden Cellulosefasern aus Holz und besonders bevorzugt aus Weichholz eingesetzt. Es können Mischungen aus Cellulosefasern unterschiedlicher Länge (lang- und kurzfaserige Cellulosen) sowie reine kurz- bzw. reine langfaserige Cellulosen eingesetzt werden, wobei die Faserlängen zwischen 0,1 mm und 7 mm und die Faserbreiten zwischen 5 $\mu$m und 30 $\mu$m, vorzugsweise zwischen 10 $\mu$m und 30 $\mu$m liegen. Die Cellulose bildet im Filter ein dreidimensionales Netzwerk, das eine hohe mechanische Stabilität und hohe Flussraten gewährleistet. In den Hohlräumen des dreidimensionalen Netzwerkes befindet sich neben den anorganischen Pulvern kurzfaserige Cellulose, die auch als Füllstoff fungiert und zur Glättung der Filteroberfläche beiträgt. In einer bevorzugten Ausführungsform wird ausschließlich kurzfaserige Cellulose als Cellulosefaser verwendet. Es können auch Derivate der Cellulosefasern eingesetzt werden, wobei wasserlösliche Carboxyalkylcellulosen bevorzugt werden. Besonders bevorzugt unter den wasserlöslichen Carboxyalkylcellulosen ist Carboxymethylcellulose (CMC). Der Gewichtsanteil von CMC in den für die Herstellung der erfindungsgemäßen Tiefenfilterschichten verwendeten Gemischen beträgt zwischen 0,1 und 10 %, bevorzugt zwischen 0,3 und 2,0 %, mehr bevorzugt zwischen 0,4 und 1,5 % und am meisten bevorzugt zwischen 0,5 und 1,0 %. CMC führt in Kombination mit Epichlorhydrin-Harzen zu verbesserter Trocken- und Naßfestigkeit. Weiterhin können als Derivate der Cellulose kationisch modifizierte Cellulosen verwendet werden, wie z.B. Cellulose funktionalisiert mit Ammoniumionen-tragenden Gruppen, bevorzugt Trimethylammoniumpropylcellulose-chlorid sowie 2-Hydroxy-trimethylammoniumpropyl-cellulose-chlorid oder funktionalisiert mit Aminogruppen, bevorzugt Alkylamine.

Die anorganischen Schichtdoppelhydroxide der erfindungsgemäßen Tiefenfilterschichten sind bevorzugt ausgewählt aus der Gruppe der natürlichen und synthetischen Hydrotalcite und hydrotalcitähnlichen Verbindungen, wie sie von F. Cavani et al. in Catalysis Today 1991, 11(2), 173-301, beschrieben sind. In diesem Zusammenhang sei insbesondere auf die Seiten 176 bis 191 verwiesen, deren Offenbarungsgehalt hierin durch Bezugnahme eingeschlossen ist. Hydrotalcit besitzt eine kationische Schichtstruktur mit austauschbaren Anionen in den Zwischenschichträumen. Erfindungsgemäß lassen sich für die vorgenannten natürlichen und synthetischen Hydrotalcite und hydrotalcitähnliche Verbindungen beispielsweise die folgenden Formeln zur Veranschaulichung angeben:

$$[(M^{2+})_{1-x}(M^{3+})_x(OH)_2]^{x+}(A^{n-}{}_{x/n}) - mH_2O$$

$$[(M^{+})_{1-x}(M^{3+})_x(OH)_2]^{(2x-1)+}(A^{n-}{}_{(2x-1)/n}) - mH_2O$$

x kann hierbei Werte von 0 bis 1 annehmen, bevorzugt ist $0{,}1 \leq x \leq 0{,}5$, mehr bevorzugt ist $0{,}2 \leq x \leq 0{,}33$. n kann Werte von 1 bis 4 annehmen, m variiert je nach Kristallwasseranteil und ist eine rationale Zahl einschließlich 0. Die maximal mögliche Menge an Kristallwasser in entsprechenden Verbindungen ist über verschiedene Ansätze bestimmbar, die in der vorstehenden Quelle auf den Seiten 189 und 190 beschrieben sind. Des weiteren lassen sich für die vorgenannten natürlichen und synthetischen Hydrotalcite und hydrotalcitähnliche Verbindungen beispielsweise auch Verbindungen angeben, bei denen sowohl $M^+$ als auch $M^{2+}$ enthalten sind. Für diese Fälle sei ebenfalls auf die vorstehende Quelle verwiesen.

Erfindungsgemäß wird bevorzugt Hydrotalcit $Mg_6Al_2(CO_3)(OH)_{16}$ -4 $H_2O$ als natürliches oder synthetisches, nicht kalziniertes Produkt verwendet. Im Allgemeinen bestehen die verwendeten Schichtdoppelhydroxide aus den ein-, zwei- und dreiwertigen Metall-Kationen $M^+$, $M^{2+}$ und $M^{3+}$, den Hydroxid-Anionen $OH^-$ und einem weiteren ein- bis vierwertigen Anion $A^{n-}$ (n = 1, 2, 3, 4) sowie gegebenenfalls Kristallwasser. Dabei ist $M^+$ ein einwertiges Alkalimetallion wie z.B. $Li^+$ oder $Na^+$, $M^{2+}$ ein zweiwertiges Erdalkali- oder Übergangsmetallion wie z.B. $Mg^{2+}$, $Sr^{2+}$, $Ba^{2+}$, $Ni^{2+}$, $Cu^{2+}$, $Co^{2+}$, $Zn^{2+}$, $Fe^{2+}$, $Mn^{2+}$, oder $Ca^{2+}$, $M^{3+}$ ein dreiwertiges Hauptgruppen- oder Übergangsmetallion wie z.B. $B^{3+}$, $Al^{3+}$, $Ga^{3+}$, $Ni^{3+}$, $Co^{3+}$, $Cr^{3+}$, $Fe^{3+}$, $Mn^{3+}$, $V^{3+}$, $Ti^{3+}$, $Sc^{3+}$ oder $In^{3+}$; $A^{n-}$ ein Anion wie z.B. F, $Cl^-$, $Br^-$, $I^-$, $OH^-$, $NO_3^-$, $ClO_4^-$ , $ClO_3^-$, $IO_3^-$, $CO_3^{2-}$, $SO_4^{2-}$, $PO_4^{3-}$, $AsO_4^{3-}$, $S_2O_3^{2-}$, $WO_4^{2-}$, $CrO_4^{2-}$, $[Fe(CN)_6]^{3-}$, $[Fe(CN)_6]^{4-}$, $[SiO(OH)_3]^-$, Heteropolysäuren, organische Säuren oder metallorganische Komplexe. Beispiele für Heteropolysäuren sind hierbei $(PMo_{12}O_{40})^{3-}$, $(PW_{12}O_{40})^{3-}$, Beispiele für organische Säuren sind Adipin-, Oxal-, Bernstein-, Malon-, Sebacin-, 1,12-Dodecandicarbonsäure, Acyl- und Arylsulfonate, Chlorzimtsäure, und ein Beispiel für einen metallorganischen Komplex ist $[Ru(4,7\text{-diphenyl-1, 10-phenanthrolindisulfonat})_3]^{4-}$. Das Molverhältnis von $M^{2+}$ zu $M^{3+}$ liegt dabei bei maximal 2,5 : 1, bevorzugt bei maximal 2,3 : 1 und besonders bevorzugt bei maximal 2,1 : 1. Das Gewichtsverhältnis von $M^{2+}$ zu $M^{3+}$, berechnet als Gewichtsverhältnis der Oxide MO zu $M_2O_3$, liegt bei maximal 2,2 : 1, bevorzugt bei maximal 2,0 : 1 und besonders bevorzugt bei maximal 1,85 : 1. Am meisten bevorzugt wird synthetisches, nicht kalziniertes Hydrotalcit aus Magnesium- und Aluminiumkationen und Carbonat als Anion eingesetzt. In den Ausführungsbeispielen wird das Aluminium-Magnesium-Hydroxycarbonat Syntal® 696 der Südchemie AG eingesetzt, wobei das Gewichtsverhältnis der Oxide MgO zu $Al_2O_3$ gleich 1,625 beträgt. Der Durchmesser der anorganischen Schichtdoppelhydroxid-Partikel liegt zwischen 0,1 μm und 500 μm, bevorzugt zwischen 0,3 und 300 μm und besonders bevorzugt zwischen 0,5 und 100 μm. Die eingesetzten Hydrotalcite weisen Brunauer-Emmet-Teller(BET)-Oberflächen von mehr als 15 $m^2/g$, bevorzugt mehr als 25 $m^2/g$ und besonders bevorzugt von mehr als z35 $m^2/g$ auf. In den speziellen Ausführungsbeispielen werden Hydrotalcit-Pulver mit einer BET-Oberfläche von 50 $m^2/g$ bzw. 54 $m^2/g$ verwendet. Die BET-Oberflächen werden dabei wie nachfolgend angegeben bestimmt.

Die erfindungsgemäßen Tiefenfilterschichten können als anorganische Pulver nur anorganische Schichtmaterialien enthalten sowie eine Mischung aus anorganischen Schichtmaterialien und auf $SiO_2$ basierenden Partikeln und/oder mindestens eines seiner Derivate. Als auf $SiO_2$ basierende Partikel werden bevorzugt poröses Kieselgur und/oder synthetisches Kieselgel, gegebenenfalls in Kombination mit Perliten eingesetzt. Besonders bevorzugt werden Diatomeenerden gegebenenfalls in Kombination mit Perliten eingesetzt, am meisten bevorzugt natürliche Diatomeenerden. Natürliche Diatomeenerden sind nicht kalziniert. Derivate der auf $SiO_2$ basierenden Partikel umfassen alle auf $SiO_2$ basierenden Anionenaustauschermaterialien, wie z.B. $SiO_2$ funktionalisiert mit organischen Gruppen, die quartäre Ammonium-Ionen enthalten, besonders bevorzugt $SiO_2$ funktionalisiert mit Trimethylammoniumpropylchlorid. Die mittleren Partikelgrößendurchmesser der auf $SiO_2$ basierenden Partikel liegen zwischen 0,5 μm und 100 μm, bevorzugt zwischen 2 μm und 40 μm, ganz bevorzugt zwischen 4 μm und 20 μm. In den Ausführungsbeispielen werden Kieselgure mit einem mittleren Partikelgrößendurchmesser von 8 μm verwendet.

Bevorzugt wird als anorganisches Pulver nur Hydrotalcit oder eine Mischung aus Hydrotalcit und Kieselgur eingesetzt. Besonders bevorzugt ist hierbei nur Hydrotalcit oder eine Mischung aus Hydrotalcit und Kieselgur, bei welcher der Gewichtsanteil von Hydrotalcit größer ist als der von Kieselgur. In dem Ausführungsbeispiel für den erfindungsgemäßen Tiefenfilter 7 (HT900) wird nur Hydrotalcit verwendet, und in den weiteren Ausführungsbeispielen ist der Gewichtsanteil an Hydrotalcit bevorzugt mindestens 1,7 mal so hoch, besonders bevorzugt mindestens doppelt so hoch wie der von Kieselgur.

Der Gewichtsanteil der anorganischen Pulver bezogen auf die anderen eingesetzten Komponenten liegt zwischen 10 % und 75 % und bevorzugt zwischen 20 % und 70 %, besonders bevorzugt sind 30 % bis 65 %. Je höher der Anteil an Hydrotalcit in den Tiefenfilterschichten, desto höher sind die DNS-Bindungskapazitäten des erfindungsgemäßen Tiefenfilters.

Als Nassfestmittel werden erfindungsgemäß wasserlösliche Harze aus der Gruppe Epichlorhydrin-Harze, Melamin-Formaldehyd-Harze, Harnstoff-Formaldehyd-Harze, Glyoxal-Polyacrylamid-Harze, Isocyanat-Harze und Gemische daraus eingesetzt. Bevorzugt sind positiv geladene Epichlorhydrin-Harze, besonders bevorzugt Polyamid/Polyamin-Epichlorhydrin-Harze, Polyamin-Epichlorhydrin-Harze und Polyamid-Epichlorhydrin-Harze, wie z.B. Kymene®, Nadavjn® oder Polycup®. In den Ausführungsbeispielen wird als Nassfestmittel Kymene® der Firma Hercules eingesetzt. Bei Zusammenführung des Harzes mit den anderen Komponenten der erfindungsgemäßen Tiefenfilterschichten entstehen im Herstellungsprozess Polymerbrücken zwischen den reaktiven Azetidinium-Gruppen oder anderen auf Epichlorhydrin basierenden Gruppen des Nassfestmittels und den Carboxyl- und/oder Hydroxygruppen der Cellulosefasern und der anorganischen Pulver (bestehend aus anorganischen Schichtdoppelhydroxiden und optional aus auf $SiO_2$ basierenden Partikeln wie natürliche Diatomeenerde oder synthetisches Kieselgel), wobei es vorwiegend erst im späteren Trocknungsprozess der Filterherstellung zu einer chemischen Vernetzung unter Ausbildung von kovalenten Bindungen, wie z.B. Esterbindungen, und von nicht kovalenten Bindungen kommt. Erst durch diese Reaktion behält der Tiefenfilter im Anwendungsprozess seine Nassfestigkeit unter Beibehaltung der positiven Ladung. Der Gewichtsanteil des Nassfestmittels bezogen auf die übrigen, zugegebenen Filterkomponenten liegt zwischen 0,5 % und 10 %, bevorzugt zwischen 1 % und 5 %. In den Ausführungsbeispielen werden 2 % Nassfestmittel eingesetzt.

Die vorliegende Erfindung stellt eine Tiefenfilterschicht bereit, hergestellt aus

- Cellulosefasern und/oder ihren Derivaten,
- mindestens einem anorganischen Schichtdoppelhydroxid und
- mindestens einem organischen Naßfestmittel,

wobei die Tiefenfilterschicht hergestellt ist aus einem Gemisch, in welchem der Massenanteil des mindestens einen anorganischen Schichtdoppelhydroxids 10-65 %, der Massenanteil der Cellulosefasern und/oder ihrer Derivate 30-80 % und der Massenanteil des organischen Naßfestmittels 0,5-10 % betragen und sich die Massenanteile zu 100 % ergänzen.

Die Herstellung der erfindungsgemäßen Tiefenfilterschichten erfolgt nach folgendem Verfahren, umfassend die Schritte:

(1) Bereitstellen von Cellulosefasern und/oder ihren Derivaten in mindestens einem flüssigen Medium,
(2) Zugeben von mindestens einem anorganischen Schichtdoppelhydroxid,
(3) Zugeben von mindestens einem organischen Naßfestmittel zu dem in Schritt (2) erhaltenen Gemisch,
(4) Auftragen der in Schritt (3) erhaltenen Suspension auf einen Träger,
(5) Entfernen des mindestens einen flüssigen Mediums und
(6) Trocknen der in Schritt (5) erhaltenen Tiefenfilterschicht.

Die Cellulosefasern werden gemäß einer bevorzugten Ausführungsform in Wasser gegeben und mit einer Mahlmaschine bis zu der gewünschten Feinheit vermahlen. Der Mahlgrad der Cellulose-Fasern bestimmt vorwiegend neben der Partikelgröße der eingesetzten anorganischen Pulver und des Pulveranteils im Filter die Filtrationsschärfe des Tiefenfilters. Das Vermahlen der Cellulosefasern kann auch nach Zugabe des anorganischen Schichtdoppelhydroxids, d.h. nach Schritt (2), oder nach Zugabe des Nassfestmittels, d.h. nach Schritt (3), erfolgen.

Unter Filtrationsschärfe soll hierbei eine Abtrennung von Bestandteilen unterschiedlicher Größen aus Lösungen verstanden werden. Die Tiefenfiltration kann auch für solche Teilchen wirksam sein, die kleiner als die Porengröße der Filterschicht sind. Deshalb wird bei Tiefenfiltern der Filtrationseffekt nicht durch die Angabe der Porendurchmesser wie bei Membranen angegeben, die auf absoluten Rückhalteraten beruhen. Die Charakterisierung der Filtrationsschärfe erfolgt hier vielmehr durch die Angabe der Wasserdurchlässigkeit unter definierten Bedingungen.

Nach Zugabe der anorganischen Pulver beträgt der Gesamtfeststoffgehalt einer wäßrigen Suspension aus Cellulosefasern und anorganischen Pulvern ca. 4 %. Die Zugabe des Nassfestmittels kann erfindungsgemäß vor oder nach der Zugabe der anorganischen Pulver erfolgen. Die erhaltene Suspension wird beispielsweise auf einer Siebvorlage aufgetragen, beispielsweise Wasser wird durch Anlegen eines Flächenvakuums entfernt, wobei gemäß einer bevorzugten Ausführungsform gleichzeitig die aufkonzentrierte Suspension durch überfahrende Walzen homogenisiert und die entstehende Filteroberfläche geglättet wird. Die nasse Tiefenfilterschicht wird bevorzugt mittels einer Walze auf die gewünschte Filterdicke gepresst und bevorzugt in einem Trockenofen mit variabel einstellbaren Temperaturzonen bei ca. 100-250 °C getrocknet. Hierbei kann die Trocknung mit einem ansteigenden Temperaturprofil oder bei einer konstanten Temperatur erfolgen. Bevorzugt wird ein Temperaturprofil gefahren, ganz bevorzugt ein Temperaturprofil mit verschiedenen Temperaturzonen. Bevorzugt liegt die Dicke der erfindungsgemäßen Tiefenfilterschichten zwischen 1 und 8 mm, besonders bevorzugt zwischen 2 und 6 mm. In den Ausführungsbeispielen liegt die Dicke zwischen 3,0 mm und 4,5 mm. Der Wasserdurchfluß als Maß für die Filtrationsschärfe der erfindungsgemäßen Tiefenfilter erfolgt durch Messen der Zeit, die ein erfindungsgemäßer Tiefenfilter mit einer Größe von 47 mm Durchmesser für 100 ml destilliertes Wasser bei 1 bar Differenzdruck benötigt, angegeben in der Einheit [s]. Der Wasserdurchfluß wird häufig auch als Wasserdurchflussrate mit der Einheit [Liter/($m^2_{Filter}$ · Minute)] angegeben. Bevorzugt sind erfindungsgemäße Tiefenfilterschichten mit Wasserdurchflußraten von 20 bis 2000 l/($m^2$ min) bei einer Dicke von ca. 4 mm.

Gemäß einer weiteren bevorzugten Ausführungsform der vorliegenden Erfindung kann vor oben beschriebenem Schritt (4) Siliciumdioxid und/oder mindestens eines seiner Derivate als weitere Komponente zugegeben werden. Alternativ kann gemäß der vorliegenden Erfindung Siliciumdioxid und/oder mindestens eines seiner Derivate in Schritt (2) zusammen mit dem mindestens einen anorganischen Schichtdoppelhydroxid zugegeben werden.

Gemäß einer weiteren bevorzugten Ausführungsform der vorliegenden Erfindung werden vor dem oben beschriebenen Schritt (4) Kieselgur und/oder Perlite als weitere Komponenten zugegeben. Alternativ können gemäß der vorliegenden Erfindung Kieselgur und/oder Perlite in Schritt (2) zusammen mit dem mindestens einen anorganischen Schichtdoppelhydroxid zugegeben werden.

Die Verwendung der erfindungsgemäßen Tiefenfilterschichten erfolgt in Filtrationsprozessen zur Entfernung partikulärer, kolloidaler und gelöster Komponenten aus flüssigen Medien. Die abzutrennenden Komponenten sind hierbei bevorzugt unerwünschte biologische Kontaminanten. Besonders bevorzugt umfassen die abzutrennenden Komponenten Kontaminanten aus Zellkulturlösungen, wie z.B. Zellen, Zellbruchstücke, kolloidale Bestandteile, Zellproteine, DNS, Viren, Endotoxine. Die Abtrennung umfasst hierbei mindestens eine der unerwünschten biologischen Kontaminanten aus dem flüssigen Medium, während Zielprodukte, die ebenfalls in dem flüssigen Medium enthalten sind, die Tiefenfilterschicht ungehindert und in aktiver Form passieren können. Unter Zielprodukten versteht man alle Produkte, die mittels des vorgelagerten Herstellungsprozesses gewonnen werden sollen. Bevorzugt umfassen die Zielprodukte Biomoleküle. Besonders bevorzugt werden unter Zielprodukten Proteine, Peptide, Polypeptide oder Hormone verstanden. Insbesondere werden unter Zielprodukten therapeutische Proteine verstanden. Unter flüssigen Medien werden dabei alle Medien verstanden, die ein Inkontaktbringen der abzutrennenden Bestandteile mit dem Tiefenfilter ermöglichen. Insbesondere handelt es sich hierbei um wässrige bzw. wasserhaltige Medien in Form einer Lösung, Suspension, Dispersion, Emulsion oder kolloidalen Lösung. Dabei können aus der Praxis alle flüssigen Medien eingesetzt werden wie z.B. biologische und biotechnologische Lösungen, medizinische Lösungen, Lösungen aus der Nahrungs-, Getränke-, Futtermittel- und Abfallindustrie sowie Lösungen aus der chemischen Industrie. Bevorzugt werden die erfindungsgemäßen Tiefenfilterschichten zur Filtration von flüssigen Medien aus der biologischen, biotechnologischen und pharmazeutischen Industrie sowie aus der Nahrungs- und Getränkeindustrie eingesetzt. Besonders bevorzugt werden die Tiefenfilterschichten zur Filtration von biologischen und biotechnologischen Lösungen eingesetzt. In den Ausführungsbeispielen werden die Tiefenfilterschichten zur Filtration von Zellkulturlösungen sowie DNS- und proteinhaltigen biologischen Lösungen eingesetzt. Die Entfernung der abzutrennenden Bestandteile aus den zu filtrierenden flüssigen Medien kann dabei über Größenausschluss, über adsorptive Mechanismen, über Ionenaustauschprozesse und/oder Interkalation erfolgen.

Gegebenenfalls müssen die neuen Tiefenfilterschichten vor ihrer Verwendung je nach Verfahren vorbereitet werden durch Spülprozesse, wie z.B. Vorspülen mit Wasser oder mit pufferhaltigen Lösungen. Gegebenenfalls müssen auch die zu filtrierenden flüssigen Medien je nach Verfahren vorbereitet werden, wie z.B. durch Vorfiltration oder Zentrifugation.

Eine Filtrationsvorrichtung, welche die vorstehend charakterisierte Tiefenfilterschicht umfasst, umfaßt bevorzugt ein Filtergehäuse aus Metall oder besonders bevorzugt aus Kunststoff oder aus ähnlichen Materialien, die eine kostengünstige Einmalverwendung der Filtrationsvorrichtung ermöglichen, sowie mindestens eine der vorstehend charakterisierten Tiefenfilterschichten.

Ferner wird ein Verfahren zur Abtrennung mindestens einer biologischen Kontaminante von mindestens einem Zielprodukt in einem flüssigen Medium bereitgestellt, umfassend die Schritte:

(a) Inkontaktbringen des flüssigen Mediums, welches die mindestens eine Kontaminante und das mindestens eine Zielprodukt umfasst, mit mindestens einer erfindungsgemäßen Tiefenfilterschicht,
(b) Zurückhalten der mindestens einen Kontaminante durch die mindestens eine Tiefenfilterschicht und
(c) Gewinnen eines Filtrats, umfassend das mindestens eine Zielprodukt und das flüssige Medium.

Als zusätzlicher Schritt (d) kann in einer weiteren bevorzugten Ausführungsform nach Schritt (c) ein Waschen der Tiefenfilterschicht mit dem flüssigen Medium und/oder mit einem Spülmedium zur Erhöhung der Menge des mindestens einen Zielprodukts im Filtrat erfolgen.

Das erfindungsgemäße Verfahren kann für sich stehen oder Teil eines komplexeren Verfahrens sein, das weitere nachfolgende Aufreinigungsschritte umfaßt.

Die Figuren 1 bis 6 zeigen Durchbruchskurven, die nachfolgend näher erläutert werden.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

**Beispiele**

<u>Beschreibung der Analysenmethoden</u>

<u>Statische DNS- und Proteinbindung</u>

Zur Bestimmung der statischen Bindungskapazität von anorganischen Pulvern werden definierte Suspensionen der Pulver in destilliertem Wasser hergestellt mit einer Menge von 50 mg anorganischem Pulver / ml destilliertem Wasser. Die Suspensionen werden in 1-ml-Aliquots in 10-ml-Plastikzentrifugenröhrchen verteilt. Zu den Aliquots werden weitere 3,5 ml dest. Wasser und 0,5 ml 10x konzentrierter PBS-Puffer (2,4 g $KH_2PO_4$/ l, 14,4 g $Na_2HPO_4$. 2 $H_2O$/ l, 80 g NaCl/ l, 2g KCl/ l in Wasser) gegeben, gemischt und für 10 min. unter Schütteln zur Äquilibrierung inkubiert. Der Überstand wird nach Zentrifugation abgenommen. Das äquilibrierte Pulver wird mit 2,5 ml einer DNS-Testlösung oder einer Proteintestlösung für 3 h bei Raumtemperatur unter Schütteln inkubiert. Als Testlösung wird Lachssperma-DNS (Na-Salz, Größenverteilung 500 - 1000 Basenpaare, Produktnummer 54653, Firma Biomol) bzw. ein polyklonales humanes IgG-Gemisch (Cytoglobin®/ Firma Bayer Vital, D-Leverkusen) mit einer Konzentration von 1 mg/ml gelöst in 1x konzentriertem PBS-Puffer verwendet. Anschließend wird nach Zentrifugation die DNS- bzw. Proteinkonzentration des Überstandes photometrisch anhand einer Standardreihe bestimmt.

BET-Bestimmung von anorganischen Pulvern und Tiefenfiltermaterialien

Die Bestimmung der adsorptiven Oberfläche der Materialien nach der Brunauer-Emmet-Teller(BET)-Methode erfolgt mit Hilfe der Gemini BET Anlage (Firma Micromeretics). Zur Vorbereitung werden Glasprobenröhrchen zu ca. 25 % mit den Proben gefüllt und zur Trocknung für 2 h unter Vakuum bei 120 °C ausgeheizt. Die Probeneinwaage der getrockneten Probe wird anhand der Gewichtsdifferenz zum leeren Probenröhrchen bestimmt. Zur Messung der BET-Oberfläche wird das Probenröhrchen in der Gemini BET Anlage in der vorgesehenen Halterung fixiert. Die Messung erfolgt im Vergleich zu einem leeren Referenzröhrchen unter Kühlung mit flüssigem Stickstoff. Die Messung und Auswertung erfolgt durch Starten der geräteeigenen Software durch Aufnahme von 11 Messpunkten bei einer Evakuierungsrate von 200 mmHg/ min. und unter Annahme der folgenden physikalischen Eigenschaften für Stickstoff:

Dichte: 0,0015468, Nicht-Idealitätsfaktor: 0,000062, molekulare Querschnittsfläche: 0,162 $mm^2$.

Dynamisch DNS- und Proteinbindung

Die Bestimmung der dynamischen Bindungskapazitäten an Tiefenfilterschichten erfolgt anhand von runden Stanzlingen mit einem Durchmesser von 47 mm und einer effektiven Filterfläche von 13,2 $cm^2$ im Durchflussmodus unter konstantem Fluss bei einer Flussrate von 4,3 ml/min. Die Stanzlinge werden in ein Edelstahlfiltrationsgehäuse (Firma Sartorius Stedim Biotech GmbH) eingelegt, mit 200 ml Reverse-Osmose-(RO)-Wasser und dann mit 60 ml 1x konzentriertem PBS-Puffer vorgespült und anschließend mit einer DNS- bzw. Proteintestlösung durchspült. Als Testlösung wird Lachssperma-DNS (Na-Salz, Größenverteilung 500 - 1000 Basenpaare, Produktnummer 54653, Firma Biomol) mit einer Konzentration von 0,5 mg/ml bzw. ein polyklonales humanes IgG-Gemisch (Cytoglobin®/ Firma Bayer Vital, Leverkusen) mit einer Konzentration von 1 mg/ml gelöst in 1 x konzentriertem PBS-Puffer verwendet. Außerdem wird als Testlösung ein Gemisch aus DNS und IgG verwendet. Dazu werden Lachssperma-DNS (Na-Salz, Größenverteilung 500 - 1000 Basenpaare, Produktnummer 54653, Firma Biomol) mit einer Konzentration von 0,5 mg/ml und gleichzeitg ein polyklonales, humanes IgG-Gemisch (Cytoglobin®/ Firma Bayer Vital, Leverkusen) mit einer Konzentration von 1 mg/ml gelöst in 1 x konzentriertem PBS-Puffer verwendet. Die Extinktionen des Filtrates werden durch ein Online-Photometer bei 260 nm bzw. bei 280 nm aufgezeichnet, aus denen die Konzentrationen mit Hilfe einer Standardreihe bestimmt werden. Bei dem Gemisch aus DNS und aus dem polyklonalen, humanen IgG-Gemisch werden die DNS-Konzentration mit Hilfe der Formel A x [Extinktion 260nm] - B x [Extinktion 280nm] und die IgG-Konzentration mit der Formel C x [Extinktion 280nm] - D x [Extinktion 260nm] berechnet. Die Koeffizienten A - D errechnen sich als gerätespezifische Konstanten aus den Extinktionskoeffizienten der DNS und des polyklonalen, humanen IgG-Gemisches, wie beschrieben in K. L. Manchester, BioTechniques 20 (6) 1996, 968 - 970. Die Auswertung der Durchbruchskurven erfolgt durch Bestimmung des 50 %-dynamischen Durchbruches (DBT, "Dynamic Breakthrough") und der kumulativen Bindung bzw. der kumulativen Transmission über den gesamten Filtrationsverlauf. Unter 50 % DBT wird das Erreichen des 50%-igen Konzentrationsniveaus im Filtratstrom verstanden, bezogen auf die eingesetzte DNS- bzw. IgG-Konzentration.

Wasserdurchfluss

Zur Messung des Wasserdurchflusses wird ein runder Tiefenfilterstanzling mit 47 mm Durchmesser in einen Filterhalter mit 200 ml Kapazität (Sartorius Stedim Biotech GmbH SM 16249) eingelegt und mit 100 ml Wasser bei 1 bar Differenzdruck vorgespült. Dann wird die Durchflusszeit in [s] für 100 ml Wasser bei 1 bar Differenzdruck mit einer Stoppuhr bestimmt. Die Berechnung der Wasserdurchflussrate erfolgt unter Annahme einer effektiven Filterfläche von 12,57 $cm^2$ mit der Formel: Wasserdurchflussrate [$l/m^2$ min] = 0,1 [l] / (12,57 x $10^{-4}$[$m^2$] x Zeit [min]).

Gewichtsbestimmung, Dickenmessung und Dichtebestimmung

Die Bestimmung von Gewicht, Dicke und Dichte von Tiefenfilterschichten erfolgt anhand von runden Stanzlingen mit einem Durchmesser von 47 mm entsprechend einer Filterfläche von 17,35 $cm^2$.

Das Gewicht wird mit einer prüfmittelüberwachten Waage (Sartorius LP 3200 D) mit einer Genauigkeit von 1 mg bestimmt.

Die Bestimmung der durchschnittlichen Dicke der Tiefenfilterproben erfolgt mit einem Dickenmessgerät der Firma Hahn & Kolb (Genauigkeit 0,01 mm). Die Dicke wird an vier Randpunkten und in der Mitte des Stanzlings bestimmt. Die durchschnittliche Dicke errechnet sich als Mittelwert der fünf Messpunkte.

Die Dichte errechnet sich aus den bestimmten Werten für Dicke und Gewicht nach der Formel:

$$\text{Dichte } [g/cm^3] = \text{Gewicht } [g] / (17{,}35 \text{ } cm^2 \text{ x Dicke } [cm]).$$

(A) Verwendete Tiefenfilter

Tiefenfilter 1: C8HP (Sartorius Stedim Biotech GmbH)
Tiefenfilter 2: S5P (Sartorius Stedim Biotech GmbH)
Tiefenfilter 3: 40DE (Millipore Corp.)
Tiefenfilter 4: 75DE (Millipore Corp.)
Tiefenfilter 5: HT500, erfindungsgemäß nach (B)
Tiefenfilter 6: HT750 , erfindungsgemäß nach (B)
Tiefenfilter 7: HT900, erfindungsgemäß nach (B)
Tiefenfilter 8: HT500G , erfindungsgemäß nach (B)

(B) Zusammensetzung der erfindungsgemäßen Tiefenfilter

Tiefenfilter 5 (HT500):

37,5 Gewichtsprozent Cellulose-Fasern (Weyerhaeuser Tyee), 0,5 Gewichtsprozent Carboxymethylcellulose, 38 Gewichtsprozent Hydrotalcit Syntal® 696 (0,8 μm-25 μm), 22 Gewichtsprozent Kieselgur SA3, 2 Gewichtsprozent Kymene®.

Tiefenfilter 6 (HT750):

32,5 Gewichtsprozent Cellulose-Fasern (Weyerhaeuser Tyee), 0,5 Gewichtsprozent Carboxymethylcellulose, 45 Gewichtsprozent Hydrotalcit Syntal® 696 (0,8 μm-25 μm), 20 Gewichtsprozent Kieselgur SA3, 2 Gewichtsprozent Kymene®.

Tiefenfilter 7 (HT900):

34,5 Gewichtsprozent Cellulose-Fasern (Weyerhaeuser Tyee), 0,5 Gewichtsprozent Carboxymethylcellulose, 63 Gewichtsprozent Hydrotalcit Syntal® 696 (0,8 μm-25 μm), 2 Gewichtsprozent Kymene®.

Tiefenfilter 8 (HT500G):

27,5 Gewichtsprozent Cellulose-Fasern (Weyerhaeuser Tyee), 0,5 Gewichtsprozent Carboxymethylcellulose, 55 Gewichtsprozent Hydrotalcit Syntal® 696 (1 μm-278 μm), 15 Gewichtsprozent Kieselgur SA3, 2 Gewichtsprozent Kymene®.

(C) Charakterisierung des Hydrotalcit-Pulvers Syntal® 696

Gemessen wurde die Bindung von Lachssperma-DNS: (Na-Salz, Größenverteilung 500 - 1000 Basenpaare, Produktnummer 54653, Firma Biomol) und von einem polyklonalen humanen IgG-Gemisch (Cytoglobin®/ Firma Bayer Vital, D-Leverkusen) im statischen System. Die exakte Durchführung erfolgte wie unter dem vorstehenden Punkt "Analysemethoden" beschrieben.

Tabelle 1

| Anorganisches Pulver (Partikelgrößenverteilung [μm]) | BET-Oberfläche [$m^2$/g] | DNS-Bindung [%] | IgG-Bindung [%] |
|---|---|---|---|
| Kieselgur SA3 | 32 | 3 | 60 |
| Hydrotalcit Syntal® 696 (0,8 μm-25 μm) | 50 | 61 | 34 |
| Hydrotalcit Syntal® 696 (1 μm-278 μm) | 54 | 71 | 24 |

Kieselgur bindet fast keine DNS. Hydrotalcit zeigt eine hohe DNS-Bindung. Beide Pulver binden nachteilhaft in großer Menge das Zielprotein IgG.

(D) Charakterisierung der Tiefenfilter

Die Bestimmung des Wasserdurchflusses, der Dicke, des Gewichtes, der Dichte und der BET-Oberfläche der Tiefenfilter erfolgt wie unter dem vorstehenden Punkt "Analysemethoden" beschrieben.

Tabelle 2

| Tiefenfilter | TF1 (C8HP) | TF2 (S5P) | TF3 (40DE) | TF4 (75DE) |
|---|---|---|---|---|
| Wasserdurchfluß (100 ml/1 bar) [s] | 4,7 | 54 | 6,0 | 74 |
| Dicke [mm] | 4,2 | 4,2 | 3,7 | 3,4 |
| Gewicht [g] Ø47mm 17,35cm$^2$. | 1,9 | 2,9 | 2,0 | 2,6 |
| Dichte [g/cm$^3$] | 0,26 | 0,40 | 0,31 | 0,44 |
| BET-Oberfläche<br>[m$^2$/cm$^3_{Tiefenfilter}$]<br>[m$^2$/g$_{Tiefenfilter}$] | <br>1,2<br>4,7 | <br>5,7<br>14,3 | | <br>4,0<br>9,1 |
| | | | | |
| Tiefenfilter | TF5 (HT500) | TF6 (HT750) | TF7 (HT900) | TF8 (HT500G) |
| Wasserdurchfluß (100 ml/1 bar) [s] | 67 | 65 | 90 | 7,7 |
| Dicke [mm] | 3,4 | 3,7 | 3,4 | 4,1 |
| Gewicht [g] Ø 47mm 17,35cm$^2$ | 2,6 | 2,9 | 2,8 | 2,9 |
| Dichte [g/cm$^3$] | 0,43 | 0,45 | 0,48 | 0,41 |
| BET-Oberfläche<br>[m$^2$/cm$^3_{Tiefenfilter}$]<br>[m$^2$/g$_{T!efenfilter}$] | <br>9,6<br>22,2 | <br>11,3<br>25,4 | <br>13,8<br>28,8 | <br>13,3<br>32,5 |

DNS-Bindung im dynamischen System

Die Bestimmung der DNS-Bindung im dynamischen System erfolgt wie unter dem vorstehenden Punkt "Analysemethoden" beschrieben.

Tabelle 3

| Tiefenfilter | 50 % DBT [mg$_{DNS}$/ml$_{TF}$] | 50 % DBT [mg$_{DNS}$/cm$^2_{TF}$] | DNS-Bindung [mg$_{DNS}$/cm$^2_{TF}$] | DNS-Bindung [%] |
|---|---|---|---|---|
| TF1 (C8HP) | 0,61 (± 0,01) | 0,31 (± 0,01) | 0,65 (±0,01) | 9 |
| TF2 (S5P) | 1,44(±0,07) | 0,76 (± 0,07) | 1,32 (±0,09) | 19 |
| TF3 (40DE) | 0,75 (±0,00) | 0,36 (± 0,00) | 0,78 (± 0,2) | 10 |
| TF4 (75DE) | 0,69 (± 0,04) | 0,29 (± 0,005) | 0,60 (± 0,004) | 8 |
| TF5 (HT500) | 5,34 (± 0,58) | 2,36 (± 0,26) | 2,97 (± 0,25) | 41 |
| TF6 (HT750) | 6,10 (± 0,05) | 2,91 (±0,09) | 3,53 (± 0,09) | 48 |
| TF7 (HT900) | 7,74 (± 0,52) | 3,48 (± 0,26) | 3,96 (± 0,24) | 53 |
| TF8 (HT500G) | 3,97 (± 0,28) | 2,37 (± 0,03) | 2,71 (± 0,25) | 40 |

Transmission des polyklonalen humanen IgG-Gemischs im dynamischen System

Die Bestimmung der IgG-Bindung im dynamischen System erfolgt exakt wie unter dem vorstehenden Punkt "Analysemethoden" beschrieben.

Tabelle 4

| Tiefenfilter | 50 % DBT [$mg_{IgG}/ml_{TF}$] | 50 % DBT [$mg_{IgG}/cm^2_{TF}$] | IgG-Bindung [$mg_{IgG}/cm^2_{TF}$] | IgG-Transmission [%] |
|---|---|---|---|---|
| TF1 (C8HP) | 1,45 (± 0,03) | 0,77 (± 0,00) | 1,77 (± 0,05) | 91 |
| TF2 (S5P) | 3,20 (± 0,18) | 1,62 (± 0,11) | 2,89 (± 0,06) | 86 |
| TF3 (40DE) | 1,39 (± 0,03) | 0,65 (± 0,01) | 1,2 (± 0,03) | 94 |
| TF4 (75DE) | 2,35 (± 0,08) | 1,06 (± 0,04) | 2,03 (± 0,02) | 90 |
| TF5 (HT500) | 5,54 (± 0,40) | 1,11 (± 0,16) | 2,62 (±0,11) | 87 |
| TF6 (HT750) | 2,85 (± 0,02) | 1,29 (± 0,00) | 2,80 (±0,01) | 86 |
| TF7 (HT900) | 2,22 (± 0,03) | 1,00 (±0,05) | 2,44 (±0,11) | 89 |
| TF8 (HT500G) | 1,81 (±0,01) | 1,00 (± 0,05) | 2,51 (±0,01) | 88 |

Für eine vergleichende Charakterisierung von Tiefenfiltern ist es notwendig, diese in Gruppen mit ähnlicher Wasserdurchflusszeit einzuteilen. Nachfolgend werden Tiefenfilter mit einer Wasserdurchflusszeit von kleiner als 10 Sekunden als grobe Tiefenfilter zusammengefasst und Tiefenfilter mit einer Wasserdurchflusszeit von größer als 50 Sekunden als enge Tiefenfilter bezeichnet. Hierbei ist die Wasserdurchflusszeit auf einen Tiefenfilter mit einem Durchmesser von 47 mm und 100 ml destilliertes Wasser bei 1 bar Differenzdruck bezogen.

Figur 1 zeigt Durchbruchskurven für den erfindungsgemäßen groben Tiefenfilter TF8 und für aus dem Stand der Technik bekannte grobe Tiefenfilter TF1 und TF3 bei einer Beladung mit Lachssperma-DNS. Alle drei Tiefenfilter haben ähnliche Wasserdurchflusszeiten und sind gröber als die Tiefenfilter TF2, TF4 und TF5 bis TF7.

Figur 2 zeigt Durchbruchskurven für aus dem Stand der Technik bekannte enge Tiefenfilter TF2 und TF4 und für die erfindungsgemäßen engen Tiefenfilter TF5, TF6 und TF7 bei einer Beladung mit Lachssperma-DNS. Alle fünf Tiefenfilter haben ähnliche Wasserdurchflusszeiten und sind enger als die Tiefenfilter TF1, TF3 und TF8.

Figur 3 zeigt Durchbruchskurven für aus dem Stand der Technik bekannte grobe Tiefenfilter TF1 und TF3 und für den erfindungsgemäßen groben Tiefenfilter TF8 bei einer Beladung mit einem polyklonalen, humanen Immunoglobin-Gemisch (IgG-Gemisch).

Figur 4 zeigt Durchbruchskurven für aus dem Stand der Technik bekannte enge Tiefenfilter TF2 und TF4 und für die erfindungsgemäßen engen Tiefenfilter TF5, TF6 und TF7 bei einer Beladung mit einem polyklonalen, humanen Immunoglobulin-Gemisch.

Figur 5 zeigt Durchbruchskurven für den erfindungsgemäßen groben Tiefenfilter TF8 und für aus dem Stand der Technik bekannte grobe Tiefenfilter TF1 und TF3 bei einer Beladung mit einem Gemisch aus Lachssperma-DNS und aus polyklonalen, humanen Immunoglobulinen.

Figur 6 zeigt Durchbruchskurven für die erfindungsgemäßen engen Tiefenfilter TF5, TF6 und TF7 und für aus dem Stand der Technik bekannte enge Tiefenfilter TF2 und TF4 bei einer Beladung mit einem Gemisch aus Lachssperma-DNS und aus polyklonalen, humanen Immunoglobulinen.

Mit den erfindungsgemäßen Tiefenfilterschichten lassen sich im Vergleich zum Stand der Technik bis zu 10 mal so hohe Abreicherungen von DNS aus Lösungen erreichen (Tabelle 3, "50 % DBT", z.B. TF4 versus TF7). Die Figuren 1 und 2 zeigen, dass bei den erfindungsgemäßen Tiefenfilterschichten sowohl bei engen als auch bei gröberen Ausführungsformen der Durchbruch an DNS im Filtrat erst deutlich später erfolgt als bei Tiefenfilterschichten des Stands der Technik, d.h. erst nach erhöhter Beladung der Tiefenfilterschicht mit einer DNS-haltigen Lösung. Dieser Vorteil zeigt sich einerseits in dem verzögerten DNS-Durchbruch bei den Ausführungsbeispielen der Tabelle 3 (vgl. tabeilierte "50 % DBT"), andererseits zeigt sich die erhöhte DNS-Bindungskapazität auch im abgeflachten Verlauf der DNS-Durchbruchskürve bei den erfindungsgemäßen Tiefenfiltern im Vergleich zu Tiefenfiltern aus dem Stand der Technik. Letztere Eigenschaft führt dazu, dass die erfindungsgemäßen Tiefenfilter auch bei längerer Standzeit ihren Vorteil bzgl. ihres DNS-Abreicherungsvermögens beibehalten (siehe Werte zur DNS-Bindung in Tabelle 3).

Des weiteren wird das gewünschte Zielprotein, d. h. das polyklonale humane IgG-Gemisch, im Vergleich zum Stand der Technik nicht stärker an die erfindungsgemäßen Tiefenfilterschichten gebunden (Figuren 3 und 4). Damit besitzen die erfindungsgemäßen Tiefenfilter in grober und enger Ausführungsform vorteilhafte Eigenschaften hinsichtlich des dynamischen Durchbruchs des IgG-Gemisches und des gesamten Verlaufes der Durchbruchskurve im Vergleich zu Tiefenfiltern nach dem Stand der Technik.

Diese vorteilhaften Eigenschaften der erfindungsgemäßen Tiefenfilterschichten manifestieren sich auch bei der Filtration von Gemischen, die ein Zielprotein und eine Kontaminante in phosphatgepufferter Kochsalzlösung enthalten, wie es unter dem vorstehenden Punkt "Analysemethoden" beschrieben ist. Die Figuren 5 und 6 zeigen das Durchbruchsverhalten eines Gemisches aus zwei Komponenten bestehend aus Zielprotein (polyklonales, humanes IgG-Gemisch) und Kontaminante (Lachssperma-DNS). Bei allen vier Beispielen von Tiefenfiltern nach dem Stand der Technik erfolgt der Durchbruch der DNS früher als der Durchbruch der IgG-Fraktion. Daher ist mit Tiefenfiltern des Stands der Technik keine selektive Abtrennung der Kontaminante vom Zielprotein möglich. Die erfindungsgemäßen Tiefenfilter hingegen zeigen ein entgegengesetztes Durchbruchsverhalten. Bei identischen Versuchsbedingungen wie bei den Tiefenfiltern nach dem Stand der Technik erfolgt der Durchbruch des Zielproteins deutlich vor dem Durchbruch der Kontaminante DNS. Damit wird eine deutliche Reduktion von DNS im Filtrat bei gleich guter Produkttransmission erst durch die erfindungsgemäßen Tiefenfilter ermöglicht (um Faktor 10; Tabelle 3, "50 % DBT"). Figur 5 zeigt das Durchbruchsverhalten für grobe Tiefenfilterschichten und Figur 6 für enge Tiefenfilterschichten. Der oben beschriebene Vorteil der erfindungsgemäßen Tiefenfilterschichten ist für beide Vergleiche klar erkennbar. Die vorteilhafte Abtrennung kontaminierender DNS durch die erfindungsgemäßen Tiefenfilter bleibt also über eine große Variantionsbreite der Offenheit dieser Filter erhalten. Daher ist es möglich, die erfindungsgemäßen Tiefenfilter auf die Partikelverteilung des zu filtrierenden Mediums hin abzustimmen und gleichzeitig die erfindungsgemäß selektive Abtrennung von Kontaminanten beizubehalten.

Damit können mit den erfindungsgemäßen, beispielsweise hydrotalcithaltigen Tiefenfilterschichten erstmals selektive Tiefenfilterschichten bereitgestellt werden, die zusätzlich zur herkömmlichen Zell- und Zellbruchstückabtrennung sowie zur Entfernung kolloidaler Bestandteile auch gleichzeitig hohe Mengen an DNS aus Zellkulturlösungen entfernen, während die Zielprodukte ungehindert und in aktiver Form den Tiefenfilter passieren können. Somit liefern die erfindungsgemäßen, beispielsweise hydrotalcithaltigen Tiefenfilterschichten Filtrate mit erhöhter Qualität bezüglich erniedrigter Kontaminanten-Konzentrationen, was vorteilhaft zu einer Vereinfachung der nachfolgenden und zum Teil aufwendigen Aufreinigungsschritte im "Downstream-Prozess" führt. Dabei können kostenintensive Schritte im finalen Teil des "Downstrearn"-Prozesses in einer deutlich kleineren Skalierung ausgeführt werden, was zu einer Kostenreduzierung bezüglich der Verfahrenskosten, aber auch zu einer Kostenreduzierung durch einen geringeren Produktverlust an Zielprotein führt. Dabei erlaubt auch die physikochemische Stabilität der neuen Tiefenfilterschichten einen Einsatz vor und nach den chromatographischen Schritten im "Downstream"-Prozess von Zellkulturlösungen, denn es werden hohe DNS-Bindungskapazitäten in dem Leitfähigkeitsprofil der Zellkulturüberstände erreicht. Die erfindungsgemäßen Tiefenfilterschichten zeigen ausreichend hohe Stabilitäten bezüglich der relevanten Parameter wie pH, Temperatur, Druck und Fluß im entsprechenden Prozessfenster des "Downstream"-Prozesses. Die erfindungsgemäßen Tiefenfilterschichten lassen sich sehr einfach zu Einwegprodukten verarbeiten, die mit höchstmöglicher Sicherheit unter Vermeidung von Kreuzkontaminationen in biotechnologischen, medizinischen und pharmazeutischen Herstellungsprozessen einsetzbar sind.

Die anorganischen Schichtdoppelhydroxid-Pulver lassen sich sehr gut in die erfindungsgemäßen Tiefenfilterschichten einarbeiten und es können mit entsprechend angepassten Partikelgrößenverteilungen auch Tiefenfilterschichten in verschiedenen Offenheiten bzw. mit verschiedenen Wasserdurchflussraten hergestellt werden. Dies erlaubt einen noch flexibleren Einsatz der Tiefenfilterschichten entsprechend des Anforderungsprofils der jeweils zu filtrierenden Prozesslösung.

## Patentansprüche

1. Tiefenfilterschicht, hergestellt aus

   - Cellulosefasern und/oder ihren Derivaten,
   - mindestens einem anorganischen Schichtdoppelhydroxid und
   - mindestens einem organischen Naßfestmittel,

wobei die Tiefenfilterschicht hergestellt ist aus einem Gemisch, umfassend einen Massenanteil des mindestens einen anorganischen Schichtdoppelhydroxids von 10-65 %, einen Massenanteil der Cellulosefasern und/oder ihrer Derivate von 30-80 % und einen Massenanteil des organischen Naßfestmittels von 0,5-10 %, bezogen auf die Gesamtmasse des Gemisches.

**2.** Tiefenfilterschicht nach Anspruch 1, wobei das mindestens eine anorganische Schichtdoppelhydroxid einwertige Alkalimetallionen $M^+$ und/oder zweiwertige Erdalkali- oder Übergangsmetallionen $M^{2+}$, dreiwertige Hauptgruppen- oder Übergangsmetallionen $M^{3+}$, n-wertige Anionen $A^{n-}$ mit n = 1-4 und Hydroxidionen $OH^-$ umfasst.

**3.** Tiefenfilterschicht nach Anspruch 1 oder 2, wobei das anorganische Schichtdoppelhydroxid die Formel

$$[(M^{2+})_{1-x}(M^{3+})_x(OH)_2]^{x+}(A^{n-}{}_{x/n})\cdot mH_2O$$

hat und wobei $0,1\leq x\leq 0,5$, $1\leq n\leq 4$ und m eine rationale Zahl einschließlich 0 ist.

**4.** Tiefenfilterschicht nach Anspruch 1 oder 2, wobei das anorganische Schichtdoppelhydroxid die Formel

$$[(M^{+})_{1-x}(M^{3+})_x(OH)_2]^{(2x-1)+}(A^{n-}{}_{(2x-1)/n})\cdot mH_2O$$

hat und wobei $0,1\leq x\leq 0,5$, $1\leq n\leq 4$ und m eine rationale Zahl einschließlich 0 ist.

**5.** Tiefenfilterschicht nach einem der Ansprüche 1 bis 3, wobei das anorganische Schichtdoppelhydroxid Hydrotalcit

$$Mg_6Al_2(CO_3)(OH)_{16}\cdot 4\ H_2O$$

ist.

**6.** Tiefenfilterschicht nach einem der vorhergehenden Ansprüche, wobei das mindestens eine organische Nassfestmittel wasserlöslich und positiv geladen ist.

**7.** Tiefenfilterschicht nach Anspruch 6, wobei das mindestens eine organische Nassfestmittel aus der Gruppe von Polyamid/Polyamin-Epichlorhydrin-Harzen, Polyamid-Epichlorhydrin-Harzen, Polyamin-Epichlorhydrin-Harzen, oder Gemischen daraus ausgewählt ist.

**8.** Tiefenfilterschicht nach einem der vorhergehenden Ansprüche, wobei die Tiefenfilterschicht zusätzlich mit Siliciumdioxid und/oder mindestens einem seiner Derivate hergestellt ist.

**9.** Tiefenfilterschicht nach einem der Ansprüche 1 bis 7, wobei die Tiefenfilterschicht zusätzlich mit Kieselgur oder Perliten oder Gemischen davon hergestellt ist.

**10.** Tiefenfilterschicht nach Anspruch 8, wobei die Tiefenfilterschicht aus einem Gemisch hergestellt ist, in welchem der Massenanteil des mindestens einen anorganischen Schichtdoppelhydroxids und des Siliciumdioxids und/oder des mindestens einen seiner Derivate 20-75 %, der Massenanteil der Cellulosefasern und/oder ihrer Derivate 30-80 % und der Massenanteil des organischen Nassfestmittels 0,5-10 % betragen und sich die Massenanteile zu 100 % ergänzen.

**11.** Tiefenfilterschicht nach Anspruch 9, wobei die Tiefenfilterschicht aus einem Gemisch hergestellt ist, in welchem der Massenanteil des mindestens einen anorganischen Schichtdoppelhydroxids und des Kieselgurs oder der Perlite oder den Gemischen davon 20-75 %, der Massenanteil der Cellulosefasern und/oder ihrer Derivate 30-80 % und der Massenanteil des organischen Nassfestmittels 0,5-10 % betragen und sich die Massenanteile zu 100 % ergänzen.

**12.** Verfahren zur Herstellung einer Tiefenfilterschicht nach einem der vorhergehenden Ansprüche, umfassend die Schritte:

(1) Bereitstellen von Cellulosefasern und/oder ihren Derivaten in mindestens einem flüssigen Medium,
(2) Zugeben von mindestens einem anorganischen Schichtdoppelhydroxid,
(3) Zugeben von mindestens einem organischen Naßfestmittel zu dem in Schritt (2) erhaltenen Gemisch,

(4) Auftragen der in Schritt (3) erhaltenen Suspension auf einen Träger,
(5) Entfernen des mindestens einen flüssigen Mediums und
(6) Trocknen der in Schritt (5) erhaltenen Tiefenfilterschicht.

**13.** Verfahren nach Anspruch 12, wobei in Schritt (2) das mindestens eine organische Naßfestmittel zugegeben wird und in Schritt (3) das mindestens eine anorganische Schichtdoppelhydroxid zugegeben wird.

**14.** Verfahren nach Anspruch 12 oder 13, wobei vor Schritt (4) Siliciumdioxid und/oder mindestens eines seiner Derivate als weitere Komponente zugegeben wird.

**15.** Verfahren zur Abtrennung mindestens einer Kontaminante von mindestens einem Zielprodukt in einem flüssigen Medium mittels mindestens einer Tiefenfilterschicht nach einem der Ansprüche 1 bis 11, umfassend die Schritte:

(a) Inkontaktbringen des flüssigen Mediums, welches die mindestens eine Kontaminante und das mindestens eine Zielprodukt umfasst, mit der mindestens einen Tiefenfilterschicht,
(b) Zurückhalten der mindestens einen Kontaminante durch die mindestens eine Tiefenfilterschicht und
(c) Gewinnen eines Filtrats, umfassend das mindestens eine Zielprodukt und das flüssige Medium.

**16.** Verfahren nach Anspruch 15, wobei die mindestens eine Kontaminante aus der Gruppe der Nukleinsäuren, Zellproteine, Viren, Endotoxine oder Gemischen davon ausgewählt ist.

**17.** Verfahren nach Anspruch 15 oder 16, wobei das mindestens eine Zielprodukt ein Protein ist.

## Claims

**1.** Depth filter layer, produced from

- cellulose fibres and/or derivatives thereof,
- at least one inorganic layer double hydroxide and
- at least one organic wet strength agent,

wherein the depth filter layer is produced from a mixture comprising a content by weight of the at least one inorganic layer double hydroxide of 10-65%, a content by weight of the cellulose fibres and/or derivatives thereof of 30-80% and a content by weight of the organic wet strength agent of 0.5-10%, based on the total weight of the mixture.

**2.** Depth filter layer according to Claim 1, wherein the at least one inorganic layer double hydroxide contains monovalent alkali metal ions $M^+$ and/or divalent alkaline earth or transition metal ions $M^{2+}$, trivalent main group or transition metal ions $M^{3+}$, n-valent anions $A^{n-}$ with n = 1-4 and hydroxide ions $OH^-$.

**3.** Depth filter layer according to Claim 1 or 2, wherein the inorganic layer double hydroxide has the formula

$$[(M^{2+})_{1-x}(M^{3+})_x(OH)_2]^{x+}(A^{n-}_{x/n}) * mH_2O$$

and that $0.1 \leq x \leq 0.5$, $1 \leq n \leq 4$ and m is a rational number including 0.

**4.** Depth filter layer according to Claim 1 or 2, wherein the inorganic layer double hydroxide has the formula

$$[(M^+)_{1-x}(M^{3+})_x(OH)_2]^{(2x-1)}+(A^{n-}_{(2x-1)/n}) * mH_2O$$

and that $0.1 \leq x \leq 0.5$, $1 \leq n \leq 4$ and m is a rational number including 0.

**5.** Depth filter layer according to one of Claims 1 to 3, wherein the inorganic layer double hydroxide is hydrotalcite

$$Mg_6Al_2(CO_3)(OH)_{16} * 4\ H_2O.$$

**6.** Depth filter layer according to one of the previous claims, wherein the at least one organic wet strength agent is water-soluble and positively charged.

7. Depth filter layer according to Claim 6, wherein the at least one organic wet strength agent is selected from the group of polyamide/polyamine-epichlorohydrin resins, polyamide-epichlorohydrin resins, polyamine-epichlorohydrin resins, or mixtures thereof.

8. Depth filter layer according to one of the previous claims, wherein the depth filter layer is additionally produced with silicon dioxide and/or at least one derivative thereof.

9. Depth filter layer according to one of Claims 1 to 7, wherein the depth filter layer is additionally produced with kieselguhr or perlites or mixtures thereof.

10. Depth filter layer according to Claim 8, wherein the depth filter layer is produced from a mixture in which the content by weight of the at least one inorganic layer double hydroxide and the silicon dioxide and/or the at least one derivative thereof is 20-75%, the content by weight of the cellulose fibres and/or derivatives thereof is 30-80% and the content by weight of the organic wet strength agent is 0.5-10% and the contents by weight add up to 100%.

11. Depth filter layer according to Claim 9, wherein the depth filter layer is produced from a mixture in which the content by weight of the at least one inorganic layer double hydroxide and the kieselguhr or the perlite or the mixtures thereof is 20-75%, the content by weight of the cellulose fibres and/or derivatives thereof is 30-80% and the content by weight of the organic wet strength agent is 0.5-14% and the contents by weight add up to 100%.

12. Method for the production of a depth filter layer according to one of the previous claims, comprising the steps:

(1) preparation of cellulose fibres and/or derivatives thereof in at least one liquid medium,
(2) addition of at least one inorganic layer double hydroxide,
(3) addition of at least one organic wet strength agent to the mixture obtained in step (2),
(4) application of the suspension obtained in step (3) onto a carrier,
(5) removal of the at least one liquid medium and
(6) drying of the depth filter layer obtained in step (5).

13. Method according to Claim 12, wherein the at least one organic wet strength agent is added in step (2) and the at least one inorganic layer double hydroxide is added in step (3).

14. Method according to Claim 12 or 13, wherein silicon dioxide and/or at least one derivative thereof is added as a further component before step (4).

15. Method for the separation of at least one contaminant from at least one target product in a liquid medium by means of at least one depth filter layer according to one of Claims 1 to 11, comprising the steps:

(a) contacting the liquid medium which contains the at least one contaminant and the at least one target product, with the at least one depth filter layer,
(b) retention of the at least one contaminant by the at least one depth filter layer and
(c) obtention of a filtrate containing the at least one target product and the liquid medium.

16. Method according to Claim 15, wherein the at least one contaminant is selected from the group of the nucleic acids, cell proteins, viruses, endotoxins or mixtures thereof.

17. Method according to Claim 15 or 16, wherein the at least one target product is a protein.

## Revendications

1. Couche épaisse de filtration fabriquée à partir de

- fibres de cellulose et/ou dérivés de celles-ci
- au moins un hydroxyde inorganique double stratifié et
- au moins un agent organique résistant à l'état humide,

la couche épaisse de filtration étant fabriquée à partir d'un mélange comportant une fraction massique de 10 - 65 % dudit au moins un hydroxyde inorganique double stratifié, d'une fraction massique de 30 - 80 % de fibres de cellulose et/ou dérivés de celles-ci, et d'une fraction massique de 0.5 - 10 % de l'agent organique résistant à l'état humide, par rapport à la masse totale du mélange.

**2.** Couche épaisse de filtration selon la revendication 1 **caractérisée en ce que** ledit au moins un hydroxyde inorganique double stratifié comporte des ions de métal alcalin monovalents $M^+$ et/ou des ions de métal alcalino-terreux ou de transition bivalents $M^{2+}$, des ions de métal des groupes principaux ou de transition trivalents $M^{3+}$, des anions n-valents $A^{n-}$ avec n = 1 - 4 et des ions hydroxyde $OH^-$.

**3.** Couche épaisse de filtration selon la revendication 1 ou 2, l'hydroxyde inorganique double stratifié ayant la formule

$$[(M^{2+})_{1-x}(M^{3+})_x(OH)_2]^{x+}(A^{n-}{}_{x/n}).\ mH_2O$$

dans laquelle $0{,}1 \leq x \leq 0{,}5$, $1 \leq n \leq 4$ et m est un nombre rationnel y compris 0.

**4.** Couche épaisse de filtration selon la revendication 1 ou 2, l'hydroxyde inorganique double stratifié ayant la formule

$$[(M^+)_{1-x}(M^{3+})_x(OH)_2]^{(2x-1)+}(A^{n-}{}_{(2x-1)/n}).mH_2O$$

dans laquelle $0{,}1 \leq x \leq 0{,}5$, $1 \leq n \leq 4$ et m est un nombre rationnel y compris 0.

**5.** Couche épaisse de filtration selon l'une des revendications 1 à 3, l'hydroxyde inorganique double stratifié étant de l'hydrotalcite de formule

$$Mg_6Al_2(CO_3)(OH)_{16}.4H_2O.$$

**6.** Couche épaisse de filtration selon l'une des revendications précédentes dans laquelle ledit au moins un agent organique résistant à l'état humide est soluble dans l'eau et chargé positivement.

**7.** Couche épaisse de filtration selon la revendication 6 dans laquelle ledit au moins un agent organique résistant à l'état humide est choisi parmi le groupe comportant les résines de polyamide/polyamine-epichlorhydrine, les résines de polyamide-epichlorhydrine, les résines de polyamine-epichlorhydrine, ou les mélanges de celles-ci.

**8.** Couche épaisse de filtration selon l'une des revendications précédentes fabriquée en plus à partir de dioxyde de silicium et/ou au moins l'un des dérivés de celui-ci.

**9.** Couche épaisse de filtration selon l'une des revendications 1 à 7 fabriquée en plus à partir de Kieselgur ou de perlites ou de mélanges de ceux-ci.

**10.** Couche épaisse de filtration selon la revendication 8 fabriquée à partir d'un mélange dans lequel la fraction massique dudit au moins un hydroxyde inorganique double stratifié et du dioxyde de silicium et/ou de l'un au moins des dérivés de celui-ci est de 20 - 75 %, la fraction massique des fibres de cellulose et/ou des dérivés de celles-ci est de 30 - 80 % et la fraction massique de l'agent organique résistant à l'état humide est de 0,5 - 10 %, et les fractions massiques se complètent pour totaliser 100%.

**11.** Couche épaisse de filtration selon la revendication 9 fabriquée à partir d'un mélange dans lequel la fraction massique dudit au moins un hydroxyde inorganique double stratifié et du Kieselgur ou des perlites ou des mélanges de ceux-ci est de 20 - 75 %, la fraction massique des fibres de cellulose et/ou des dérivés de celles-ci est de 30 - 80 % et la fraction massique de l'agent organique résistant à l'état humide est de 0,5 - 10 %, et les fractions massiques se complètent pour totaliser 100%.

**12.** Procédé pour la fabrication d'une couche épaisse de filtration selon l'une des revendications précédentes, comportant les étapes suivantes :

(1) la mise à disposition de fibres de cellulose et/ou de dérivés de celles-ci dans au moins un milieu liquide,
(2) ajout d'au moins un hydroxyde inorganique double stratifié,
(3) ajout d'au moins un agent organique résistant à l'état humide au mélange obtenu à l'étape (2),
(4) application de la suspension obtenue à l'étape (3) sur un support,

(5) élimination dudit au moins un milieu liquide et
(6) séchage de la couche épaisse de filtration obtenue à l'étape (5).

**13.** Procédé selon la revendication 12 dans lequel on ajoute en étape (2) ledit au moins un agent organique résistant à l'état humide et à l'étape (3) ledit au moins un hydroxyde inorganique double stratifié.

**14.** Procédé selon la revendication 12 ou 13 dans lequel on ajoute avant l'étape (4) du dioxyde de silicium et/ou au moins l'un des dérivés de celui-ci comme composante supplémentaire.

**15.** Procédé pour la séparation d'au moins un contaminant d'au moins un produit cible, dans un milieu liquide à l'aide d'au moins une couche épaisse de filtration selon l'une des revendications 1 à 11, comportant les étapes suivantes :

(a) mise en contact du milieu liquide qui comporte ledit au moins un contaminant et ledit au moins un produit cible avec ladite au moins une couche épaisse de filtration,
(b) retenue dudit au moins un contaminant par ladite au moins une couche épaisse de filtration, et
(c) génération d'un filtrat comportant ledit au moins un produit cible et le milieu liquide.

**16.** Procédé selon la revendication 15 dans lequel ledit au moins un contaminant est choisi parmi le groupe composé des acides nucléiques, des protéines cellulaires, des virus, des endotoxines ou de mélanges de ceux-ci.

**17.** Procédé selon la revendication 15 ou 16 dans lequel ledit au moins un produit cible est une protéine.

Figur 1

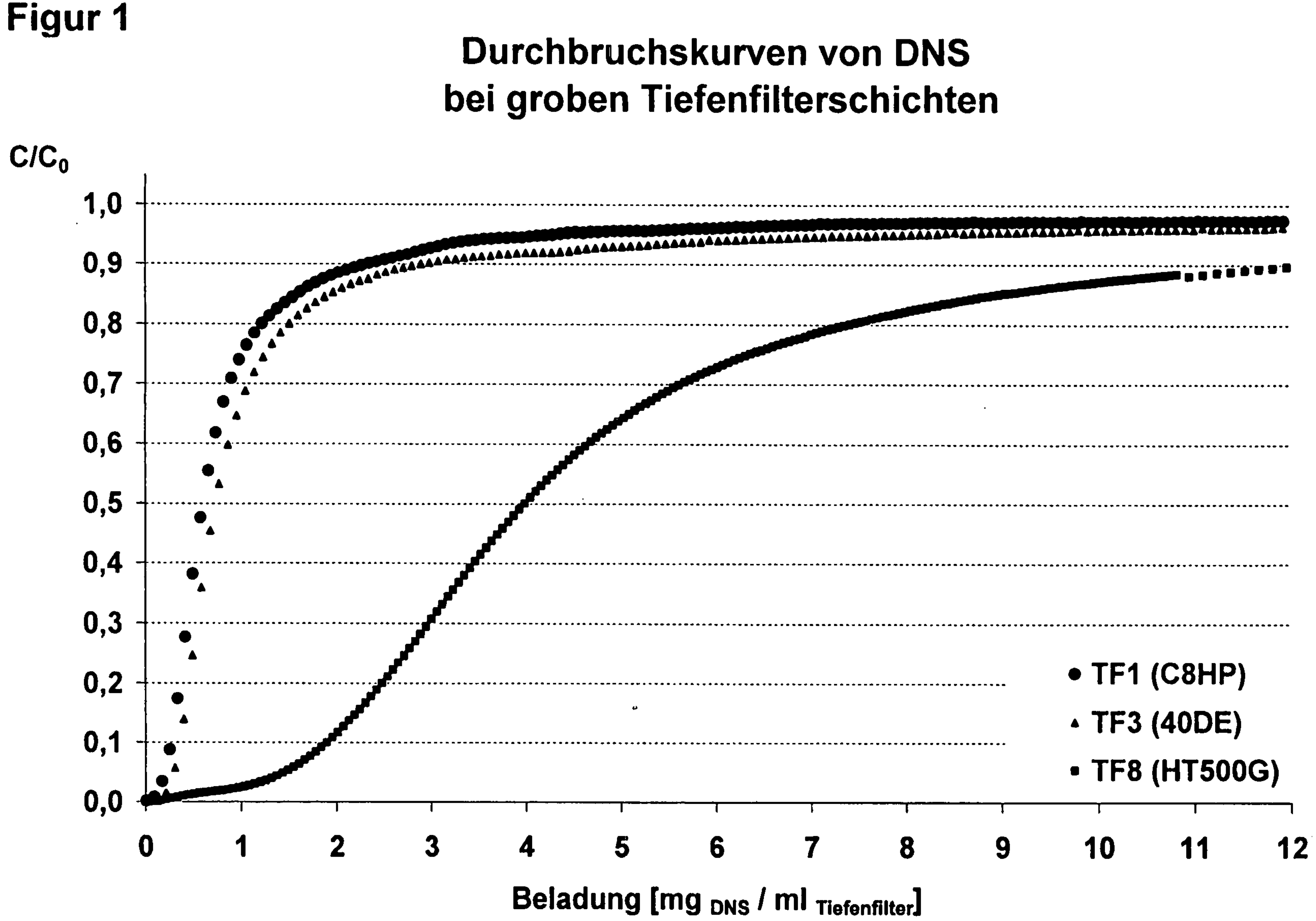
Durchbruchskurven von DNS
bei groben Tiefenfilterschichten
C/C0
1,0
0,9
0,8
0,7
0,6
0,5
0,4
0,3
0,2
0,1
0,0
0
1
2
3
4
5
6
7
8
9
10
11
12
Beladung [mg DNS / ml Tiefenfilter]
TF1 (C8HP)
TF3 (40DE)
TF8 (HT500G)

Figur 2

**Durchbruchskurven von DNS bei engen Tiefenfilterschichten**

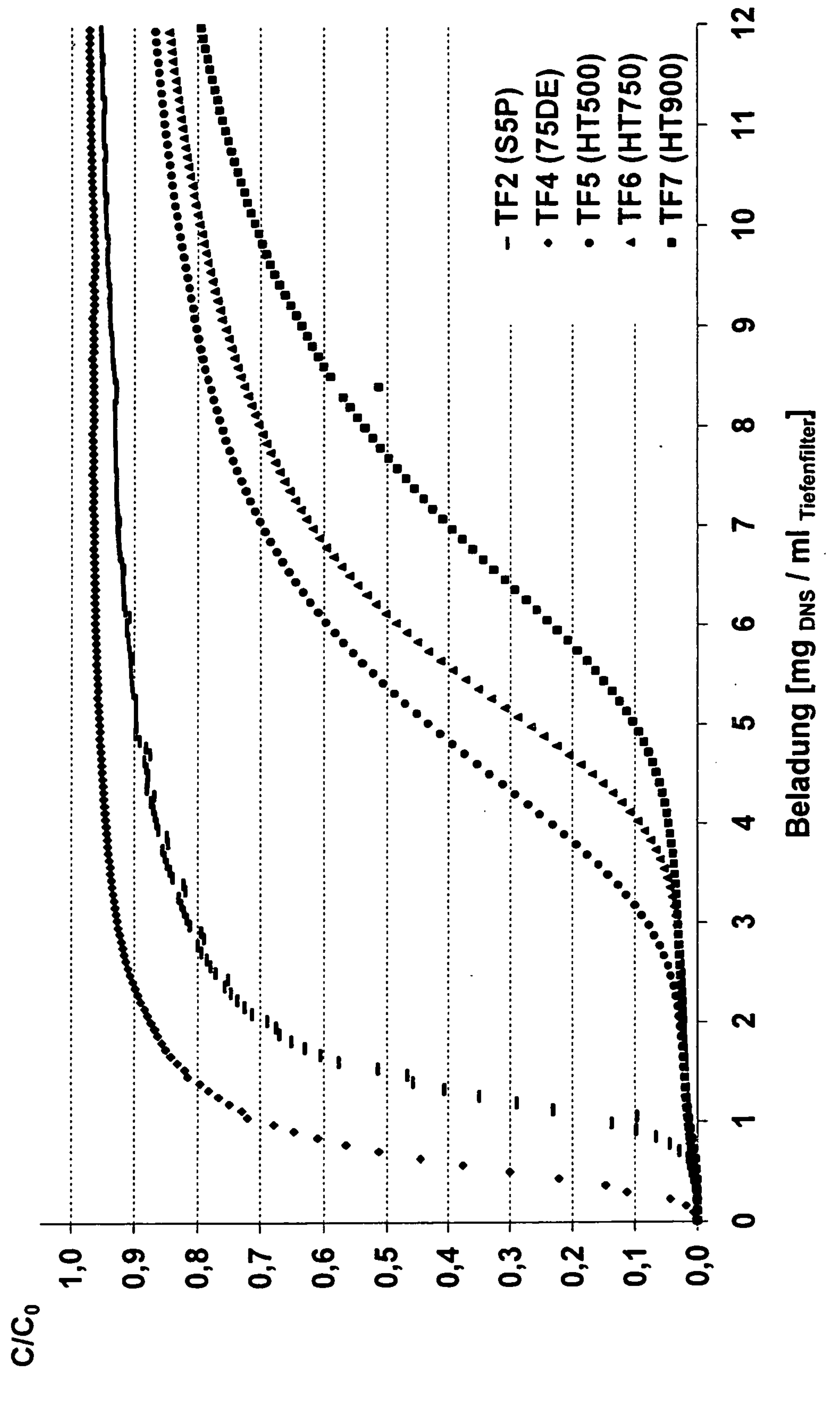

Figur 3

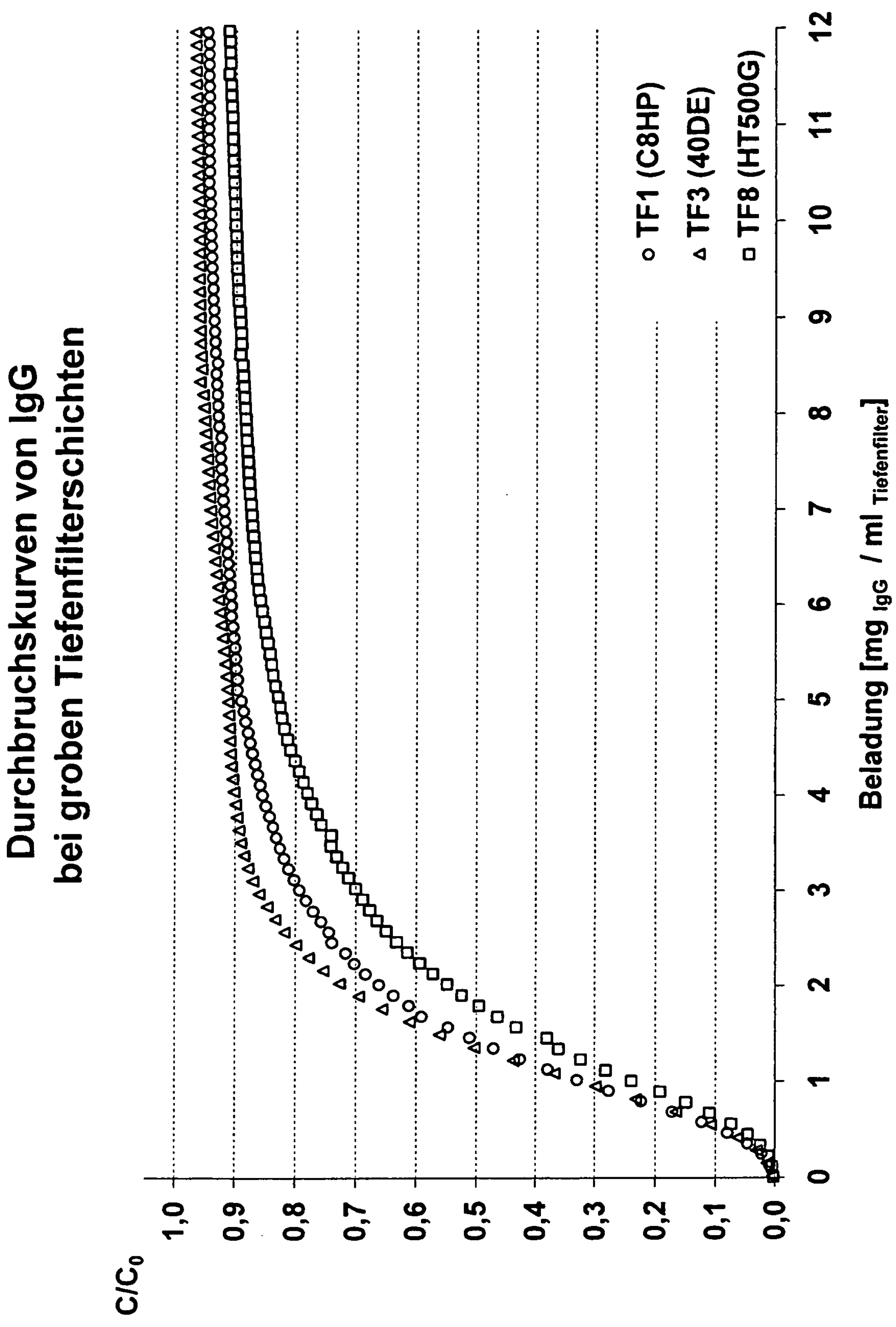
Durchbruchskurven von IgG
bei groben Tiefenfilterschichten
C/C0
1,0
0,9
0,8
0,7
0,6
0,5
0,4
0,3
0,2
0,1
0,0
0
1
2
3
4
5
6
7
8
9
10
11
12
Beladung [mg IgG / ml Tiefenfilter]
TF1 (C8HP)
TF3 (40DE)
TF8 (HT500G)

Figur 4

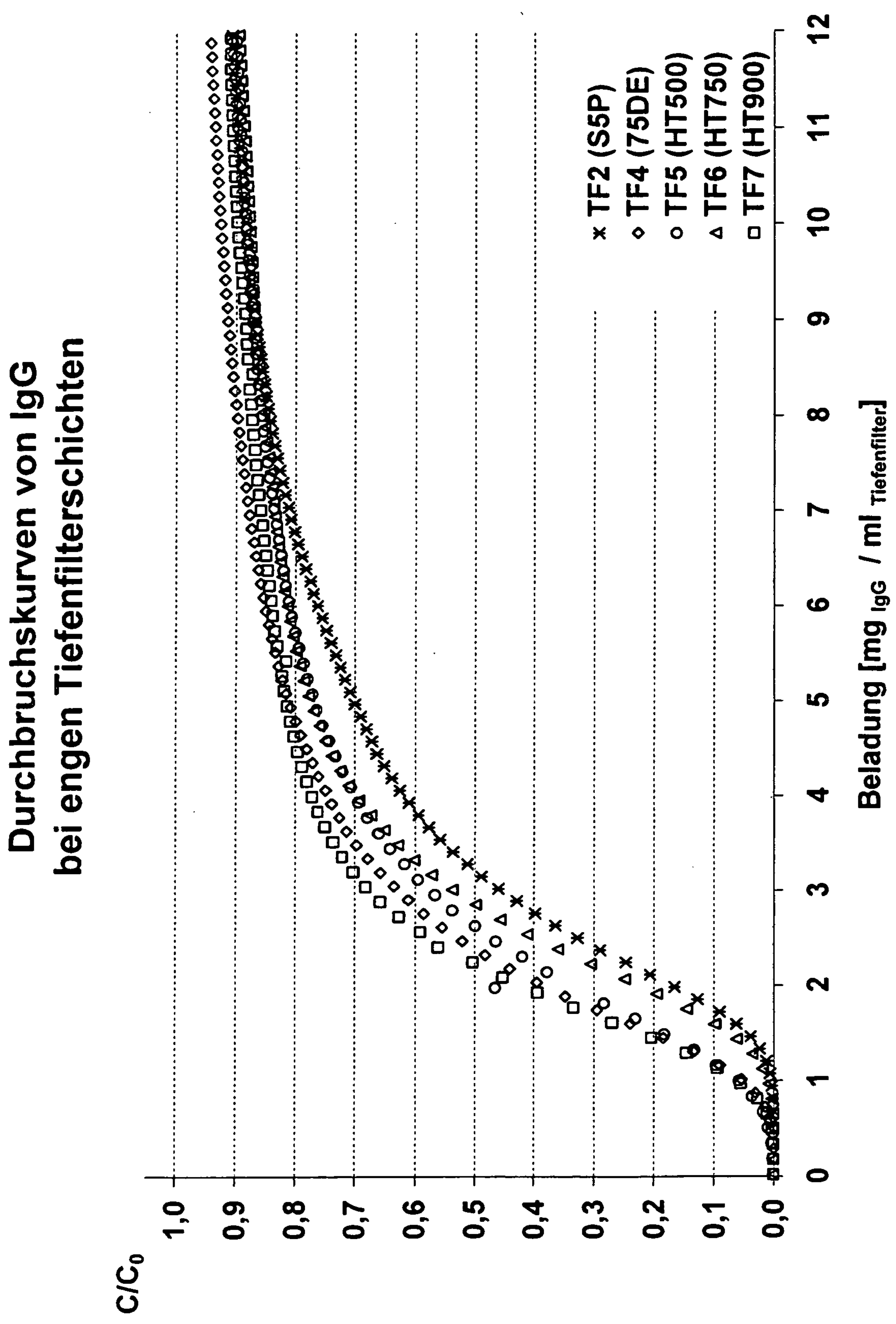
Durchbruchskurven von IgG
bei engen Tiefenfilterschichten
C/C0
1,0
0,9
0,8
0,7
0,6
0,5
0,4
0,3
0,2
0,1
0,0
0
1
2
3
4
5
6
7
8
9
10
11
12
Beladung [mg IgG / ml Tiefenfilter]
TF2 (S5P)
TF4 (75DE)
TF5 (HT500)
TF6 (HT750)
TF7 (HT900)

Figur 5

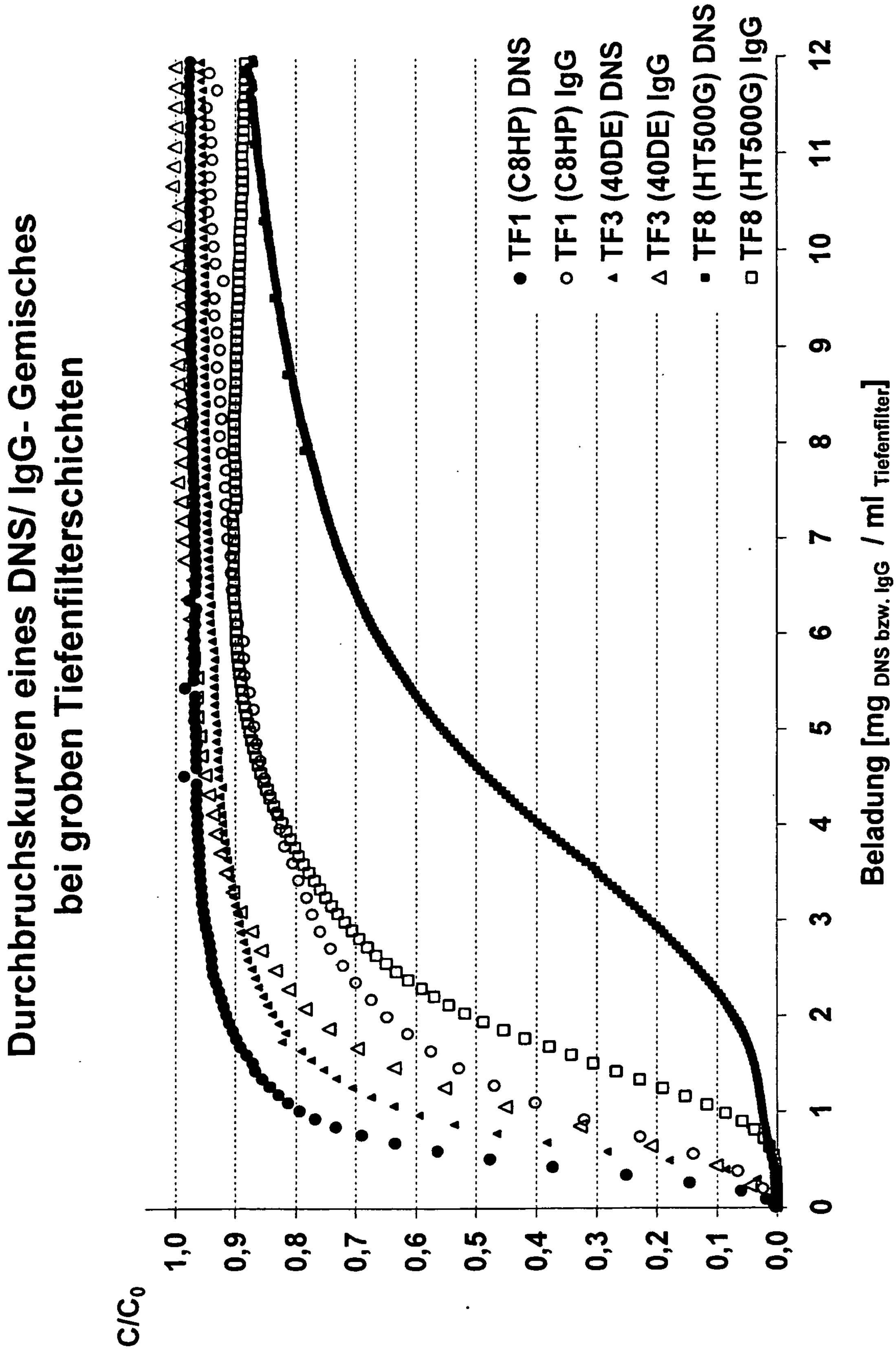
Durchbruchskurven eines DNS/ IgG- Gemisches
bei groben Tiefenfilterschichten
C/C0
1,0
0,9
0,8
0,7
0,6
0,5
0,4
0,3
0,2
0,1
0,0
0
1
2
3
4
5
6
7
8
9
10
11
12
Beladung [mg DNS bzw. IgG / ml Tiefenfilter]
TF1 (C8HP) DNS
TF1 (C8HP) IgG
TF3 (40DE) DNS
TF3 (40DE) IgG
TF8 (HT500G) DNS
TF8 (HT500G) IgG

Figur 6

Durchbruchskurven eines DNS/ IgG- Gemisches bei engen Tiefenfilterschichten

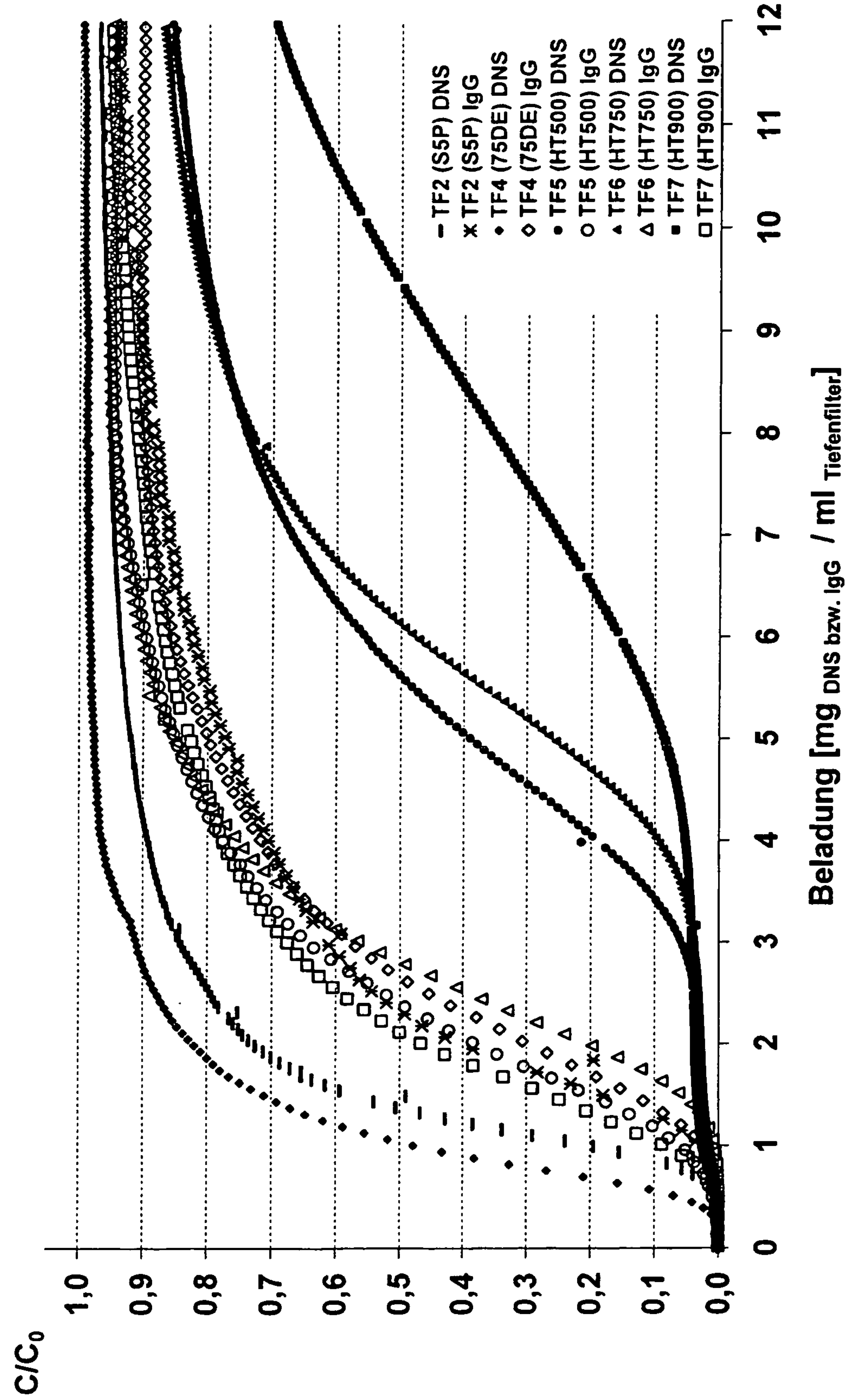

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5232595 A
- US 4676904 A
- US 4007114 A
- US 4007113 A
- US 4321288 A
- US 4305782 A
- US 4366068 A
- US 4309247 A
- US 4282261 A
- US 4859340 A
- US 4981591 A
- US 5085780 A
- GB 1483088 A
- DE 10237517 A1
- DE 10237518 A1
- JP 2006026566 A
- JP 2003047647 A
- WO 2005014160 A1
- DE 29520817 U1
- DE 10044218 A1


### In der Beschreibung aufgeführte Nicht-Patentliteratur


- **TARRACH et al.** *Pharmaceutical Technology Europe,* 01. April 2008, 71-77
- Points to Consider in the Manufacturing and Testing of Monoclonal Antibody Products for Human Use. *FDA CBER,* 28. Februar 1997
- Requirements for Biological Substances No. 50. Requirements for the Use of Animal Cells as in vitro Substrates for the Production of Biologicals. *WHO Technical Report Series No. 878,* 1998
- **K. TARRACH.** Process Economy of Disposable Chromatography in Antibody Manufacturing. *WIBio's BioProcess Technology 4th Annual Conference,* April 2007
- **J. NOLAN.** *EMD Pharmaceuticals, Downstream Technology Forum,* 09. Oktober 2007
- **YIGZAW et al.** *Biotechnol. Prog.,* 2008, vol. 22, 288-296
- *BioPharm,* Januar 1997, 46-49
- *Angew. Chem.,* 2000, vol. 112, 4207-4211
- **F. CAVANI et al.** *Catalysis Today,* 1991, vol. 11 (2), 173-301
- **K. L. MANCHESTER.** *BioTechniques,* 1996, vol. 20 (6), 968-970